# EUROPEAN PATENT APPLICATION

(11) **EP 4 793 885 A1**
(43) Date of publication of application: **19.08.2026**
(21) Application number: 24888913.1
(22) Date of filing: 09.09.2024
(51) Int. Cl.: G06T 7/30, G01S 17/89, G06T 7/11, G06T 3/60, G06T 7/20, G06T 5/00, G06N 3/08

(54) **METHOD FOR ALIGNING MAP DATA WITH FLOOR PLAN IMAGE AND SERVER DEVICE FOR PERFORMING SAME**

(30) Priority: 10.11.2023 KR 20230155721
(71) Applicant: Samsung Electronics Co., Ltd., Suwon-si, Gyeonggi-do 16677 (KR)
(72) Inventor: LEE, Sangwon, Suwon-si, Gyeonggi-do 16677 (KR); CHOI, Isak, Suwon-si, Gyeonggi-do 16677 (KR); HWANG, Jinyoung, Suwon-si, Gyeonggi-do 16677 (KR)
(74) Representative: Gulde & Partner
(86) International application number: PCT/KR2024/013622
(87) International publication number: WO 2025/100717

(57) **Abstract**

According to one embodiment of the present disclosure, provided are a method for aligning map data with a floor plan image, and a server device for performing same. The method for aligning map data with a floor plan image may comprise the steps of: obtaining a first floor plan image corresponding to an indoor space; segmenting the indoor space into a plurality of regions by using a first artificial intelligence model that uses the first floor plan image as an input; obtaining a second floor plan image from which a predefined region among the plurality of regions of the first floor plan image is removed; obtaining first map data and traveling trajectory information from an electronic device having a LiDAR sensor that scans the indoor space; obtaining second map data corresponding to a region in which the LiDAR sensor traveled among the first map data on the basis of the traveling trajectory information; and aligning the first map data with the first floor plan image on the basis of the second floor plan image and the second map data.

## Description

### Technical Field

The present disclosure relates to a method of aligning map data with a floor plan image and a server device for performing the same. More particularly, the present disclosure relates to a method of generating a training data pair by aligning LiDAR map data with a floor plan image to train an artificial intelligence model, and a server device for performing the same.

The present disclosure relates to a method of inferring a floor plan image by using map data, and an artificial intelligence model and a server device, for performing the same.

### Background Art

An electronic device such as a robot vacuum cleaner may scan a space by using a built-in LiDAR sensor while moving in the space, and generate map data for the space based on scan data. Recently, a method of processing map data by using artificial intelligence has emerged, and a method of preprocessing map data to use the map data as training data is being actively studied.

Meanwhile, as various types of home appliances have recently been distributed in a house, a multi-device environment, in which various home appliances are arranged in a space in the house, has been developed. Such a multi-device environment may provide an efficient and convenient user experience. Recently, studies have been continuously conducted to derive a positive user experience by combining functions of home appliances or user devices in the multi-device environment.

### Disclosure of Invention

### Solution to Problem

An embodiment of the present disclosure may provide a method of aligning map data with a floor plan image. The method may include obtaining a first floor plan image corresponding to an indoor space. The method may include segmenting the indoor space into a plurality of areas by using a first artificial intelligence model that uses the first floor plan image as an input. The method may include obtaining a second floor plan image in which a predefined area from among the plurality of areas of the first floor plan image has been removed. The method may include obtaining first map data and trajectory information from an electronic device including a LiDAR sensor for scanning the indoor space. The method may include, based on the trajectory information, obtaining second map data corresponding to an area in which the LiDAR sensor has traveled, from among the first map data. The method may include aligning the first map data with the first floor plan image, based on the second floor plan image and the second map data. According to an embodiment of the present disclosure, an image appropriately aligned with an image of a ground truth value may be generated for the accuracy of inference of an artificial intelligence model.

An embodiment of the present disclosure may provide a server device for performing a method of aligning map data with a floor plan image. The server device may include memory storing at least one instruction. The server device may include at least one processor configured to execute the at least one instruction. The at least one processor may execute the at least one instruction to cause the server device to obtain a first floor plan image corresponding to an indoor space. The at least one processor may execute the at least one instruction to cause the server device to segment the indoor space into a plurality of areas by using a first artificial intelligence model that uses the first floor plan image as an input. The at least one processor may execute the at least one instruction to cause the server device to obtain a second floor plan image in which a predefined area from among the plurality of areas of the first floor plan image has been removed. The at least one processor may execute the at least one instruction to cause the server device to obtain first map data and trajectory information from an electronic device including a LiDAR sensor for scanning the indoor space. The at least one processor may execute the at least one instruction to cause the server device to obtain, based on the trajectory information, second map data corresponding to an area in which the LiDAR sensor has traveled from among the first map data. The at least one processor may execute the at least one instruction to cause the server device to align the first map data with the first floor plan image based on the second floor plan image and the second map data.

An embodiment of the present disclosure may provide a computer-readable recording medium having recorded thereon a program for executing, on a computer, a user device control method according to external environment information.

### Brief Description of Drawings

The present disclosure may be easily understood by a combination of the following detailed descriptions and accompanying drawings, and reference numerals refer to structural elements.
FIG. 1 is a conceptual diagram for describing a system for generating a floor plan image from map data, according to an embodiment of the present disclosure.
FIG. 2A is a block diagram for describing an operation of a server device performing a method of aligning map data with a floor plan image, according to an embodiment of the present disclosure.
FIG. 2B is a conceptual diagram for describing a method of aligning map data with a floor plan image and a method of training an artificial intelligence model by using an aligned image, according to an embodiment of the present disclosure.
FIG. 2C is a conceptual diagram for describing a method of generating a floor plan image from map data, according to an embodiment of the present disclosure.
FIG. 3 is a flowchart for describing a method of aligning map data with a floor plan image, according to an embodiment of the present disclosure.
FIG. 4 is a diagram for describing preprocessing of a floor plan image by using segmentation, according to an embodiment of the present disclosure.
FIG. 5 is a diagram for describing preprocessing of map data by using a trajectory of a LiDAR sensor, according to an embodiment of the present disclosure.
FIG. 6 is a flowchart for describing detailed operations included in operation S360 of FIG. 3.
FIG. 7 is a conceptual diagram for describing a method of aligning map data with a floor plan image, according to an embodiment of the present disclosure.
FIG. 8 is a flowchart for describing detailed operations included in operation S610 of FIG. 6.
FIG. 9 is a conceptual diagram for describing a method of performing flipping and rotation on an image corresponding to map data and obtaining a first image, according to an embodiment of the present disclosure.
FIG. 10 is a flowchart for describing detailed operations included in operation S620 of FIG. 6.
FIG. 11 is a conceptual diagram for describing a method of performing rotation on a first image and obtaining a second image, according to an embodiment of the present disclosure.
FIGS. 12A and 12B are flowcharts for describing detailed operations included in operation S630 of FIG. 6.
FIG. 13 is a conceptual diagram for describing a method of performing scaling and translating on a second image and obtaining a third image, according to an embodiment of the present disclosure.
FIG. 14 is a flowchart for describing a method of aligning map data with a floor plan image by using a transformation matrix, according to an embodiment of the present disclosure.
FIG. 15 is a conceptual diagram for describing a method of aligning map data with a floor plan image by using a transformation matrix, according to an exemplary embodiment of the present disclosure.
FIGS. 16A to 16D are diagrams illustrating examples of performing a method of aligning map data with a floor plan image, according to an embodiment of the present disclosure.
FIGS. 17A and 17B are block diagrams for describing components of a robot vacuum cleaner according to an embodiment of the present disclosure.
FIG. 18 is a block diagram for describing components of a server device according to an embodiment of the present disclosure.
FIG. 19 is a block diagram for describing components of a user device according to an embodiment of the present disclosure.
FIG. 20 is a flowchart for describing a method of generating a floor plan image from map data, according to an embodiment of the present disclosure.
FIG. 21 is a flowchart for describing a method of generating a floor plan image from map data, according to an embodiment of the present disclosure.
FIG. 22 is a conceptual diagram for describing a device control system according to an embodiment of the present disclosure.

### Mode for the Invention

Regarding terms used in embodiments present specification, general terms which are currently and widely used are selected in consideration of functions of the present disclosure. However, the terms may vary according to intention of one of ordinary skill in the art, a judicial precedence, the appearance of a new technology, and the like. In addition, in certain cases, terms may be arbitrarily selected by the applicant, and in this case, the meaning of the terms will be described in detail in the detailed description of a corresponding embodiment. Therefore, the terms used in the present specification should be defined based on the meaning of the terms and the description throughout the present disclosure, rather than a simple name of the terms.

An expression used in the singular may encompass the expression in the plural, unless it has a clearly different meaning in the context. Terms used herein, including technical or scientific terms, may have the same meanings as those commonly understood by one of ordinary skill in the art described in the present specification.

Throughout the present disclosure, when a part "includes" or "comprises" an element, unless there is a particular description contrary thereto, the part may further include other elements, rather than excluding the other elements. In addition, terms such as "unit (or -er/or)" and "module" described in the present specification denote a unit that processes at least one function or operation, which may be implemented in hardware or software, or implemented in a combination of hardware and software.

The expression "configured to" used in the present disclosure may be used interchangeably with, for example, "suitable for", "having the capacity to", "designed to", "adapted to", "made to", or "capable of", depending on situations. The expression "configured to" may not necessarily indicate only "specially designed to" in terms of hardware. Instead, in some situations, the expression "system configured to" may indicate that the system may be "capable of" with another device or components. For example, a "processor configured to perform A, B, and C" may indicate a dedicated processor (e.g., an embedded processor) for performing corresponding operations or a generic-purpose processor (e.g., a central processing unit (CPU) or an application processor) capable of performing the corresponding operations by executing one or more software programs stored in memory.

In addition, in the present disclosure, it will be understood that when an element is "connected" or "coupled" to another element, the elements may be directly connected or directly coupled to each other, but unless otherwise stated, the elements may be connected or coupled to each other with an intervening element therebetween.

In the present disclosure, a function related to "artificial intelligence" is performed through a processor and memory. The processor may be configured as one or more processors. In this case, the one or more processors may be a general-purpose processor such as a CPU, an application processor (AP), a digital signal processor (DSP), or the like, a dedicated graphics processor such as a graphics processing unit (GPU), a vision processing unit (VPU), or a dedicated artificial intelligence processor such as a neural processing unit (NPU). The one or more processors control input data to be processed according to a predefined operation rule or an artificial intelligence model stored in memory. Alternatively, when the one or a plurality of processors are a dedicated artificial intelligence processor, the dedicated artificial intelligence processor may be designed with a hardware structure specialized for processing a specific artificial intelligence model.

The predefined operation rule or artificial intelligence model may be generated via training. Here, being generated via training means that the predefined operation rule or the artificial intelligence model set to perform desired characteristics (or purposes) is generated by training a basic artificial intelligence model by using a plurality of pieces of training data with a learning algorithm. Such training may be performed by a device for performing artificial intelligence according to the present disclosure or may be performed by a separate server and/or system. Examples of the learning algorithm include supervised learning, unsupervised learning, semi-supervised learning, and reinforcement learning, but are not limited thereto.

In the present disclosure, an "artificial intelligence model" may be a model that analyzes a linear or non-linear correlation between a plurality of operands (may also be referred to as variables or parameters). For example, the artificial intelligence model may include at least one of a linear regression model, a polynomial regression model, a logistic regression model, a decision trees model, a support vector machines (SVM) model, or a linear correlation neural networks model, but the present disclosure is not limited thereto. In an embodiment of the present disclosure, the artificial intelligence model may infer another type of variable by using one type of variable as an input. In an embodiment of the present disclosure, the artificial intelligence model may infer a correlation coefficient between variables by using different types of variables as inputs. For example, the correlation coefficient may include a Pearson correlation coefficient, a Spearman correlation coefficient, a Kendall's Tau correlation coefficient, or a Point-biserial correlation coefficient, but the present disclosure is not limited thereto.

In an embodiment of the present disclosure, the "artificial intelligence model" may include a neural network model. The neural network model may include a plurality of neural network layers. Each of the plurality of neural network layers includes a plurality of weight values, and performs a neural network operation through an operation between an operation result of a previous layer and the plurality of weight values. The plurality of weights of the plurality of neural network layers may be optimized by using a result of training the artificial intelligence model. For example, the plurality of weights may be updated such that a loss value or a cost value obtained by the artificial intelligence model during a training process is reduced or minimized. The artificial neural network model may include a deep neural network (DNN), and for example, may include a convolutional neural network (CNN), a recurrent neural network (RNN), a restricted Boltzmann machine (RBM), a deep belief network (DBN), a bidirectional recurrent deep neural network (BRDNN), or deep Q-networks, but is not limited thereto.

In the present disclosure, "map data" may refer to data indicating a structure and a feature of a real space. The map data may be data referenced when an electronic device estimates its location in the real space. The electronic device may search a surrounding environment by using a sensor and may prepare information about the surrounding environment as the map data. The map data may be used by the electronic device to accurately identify its location and at the same time, plan a path in the real space. The map data may include information about a trajectory of the electronic device (or the sensor included in the electronic device). The map data may be obtained by using various types of data obtained from the sensor.

In the present disclosure, "LiDAR map data" may refer to data obtained by scanning a target area by using a LiDAR sensor provided in the electronic device. According to an embodiment of the present disclosure, the electronic device may obtain the LiDAR map data including depth values of a plurality of spots located at predetermined specific heights (distances from the LiDAR sensor to the plurality of spots) by using the LiDAR sensor.

The present disclosure relates to a method of aligning map data (or an image corresponding to the map data) obtained through a LiDAR sensor with a floor plan image, a method of training an artificial intelligence model by using a training dataset including an aligned image and floor plan image, a method of generating (or inferring) a floor plan image by using a trained artificial intelligence model using map data as an input, and a server device performing the methods.

Hereinafter, embodiments of the present disclosure will be described in detail with reference to the accompanying drawings such that that one of ordinary skill in the art may easily implement the embodiments of the present disclosure. However, the present disclosure may be implemented in various different forms and is not limited to the embodiments described herein.

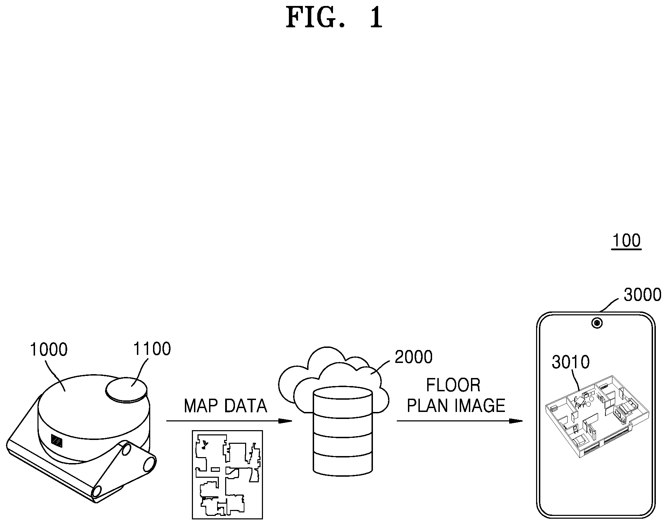

FIG. 1 is a conceptual diagram for describing a system for generating a floor plan image from map data, according to an embodiment of the present disclosure. Referring to FIG. 1, a system 100 for generating a floor plan image from map data may include an electronic device 1000, a server device 2000, and a user device 3000.

In an embodiment of the present disclosure, the electronic device 1000 may be implemented in various forms. According to an embodiment of the present disclosure, an electronic device (e.g., a robot vacuum cleaner) including a LiDAR sensor 1100 may obtain map data (or may be referred to as LiDAR map data) by directly scanning a target space.

In an embodiment of the present disclosure, the electronic device 1000 may further include a camera. The electronic device 1000 may obtain the map data based on

LiDAR scan data obtained from the LiDAR sensor and a captured image obtained from the camera.

In an embodiment of the present disclosure, the electronic device 1000 including only one of the LiDAR sensor or the camera may directly obtain only one of the LiDAR scan data or the captured image, obtain the other one from another external device, and then obtain the map data based on the obtained LiDAR scan data and captured image.

In an embodiment of the present disclosure, the electronic device 1000 may obtain both the LiDAR scan data and the captured image from the outside, and generate the map data based on the obtained LiDAR scan data and captured image.

In the present disclosure, embodiments will be described assuming that the electronic device 1000 is a robot vacuum cleaner. However, as described above, embodiments described in the present disclosure may be performed by another type of electronic device (e.g., a robot-type mobile device - a device that performs various operations while moving automatically or according to a user's command) instead of a robot vacuum cleaner. For example, an electronic device such as a butler robot or a pet robot may perform embodiments of the present disclosure. When embodiments of the present disclosure are performed by an electronic device that does not include at least one of a LiDAR sensor or a camera, an operation of the robot vacuum cleaner directly obtaining the LiDAR scan data or the captured image may be replaced with an operation of obtaining the LiDAR scan data or the captured image from the outside.

In an embodiment of the present disclosure, the electronic device 1000 may transmit the map data to the server device 2000. For example, the electronic device 1000 may include a communication interface for communicating with the server device 2000 or an external device. For example, the electronic device 1000 may transmit the map data to the server device 2000 by using wireless communication such as Wi-Fi^{™} (IEEE 802.11).

In an embodiment of the present disclosure, the server device 2000 may receive the map data from the electronic device 1000. The server device 2000 may process the map data or an image corresponding to the map data. In the present disclosure, the image corresponding to the map data may represent an image obtained by visualizing values obtained by scanning a real space (e.g., an indoor space) in a coordinate system (e.g., a two-dimensional coordinate system).

In an embodiment of the present disclosure, the server device 2000 may obtain a floor plan image (e.g., a two-dimensional floor plan image or a three-dimensional floor plan image) by using a trained artificial intelligence model that uses the map data as an input. The server device 2000 may transmit the floor plan image to the user device 3000.

In an embodiment of the present disclosure, the user device 3000 may obtain the floor plan image from the server device 2000. The floor plan image obtained from the server device 2000 may represent a floor plan image inferred from the trained artificial intelligence model. The user device 3000 may display the floor plan image through a display. The user device 3000 may provide information about an operating mode, the amount of power, and a setting of another electronic device arranged in the indoor space, together with the floor plan image corresponding to the indoor space.

In an embodiment of the present disclosure, the floor plan image obtained from the server device 2000 may be a two-dimensional floor plan image. The user device 3000 may transform the two-dimensional floor plan image into a three-dimensional floor plan image. The user device 3000 may display the three-dimensional floor plan image through the display.

In an embodiment of the present disclosure, the server device 2000 may transform the two-dimensional floor plan image inferred from the map data into the three-dimensional floor plan image. The server device 2000 may transmit the three-dimensional floor plan image to the user device 3000. The user device 3000 may receive the three-dimensional floor plan image from the server device 2000. The user device 3000 may display the three-dimensional floor plan image through the display.

In an embodiment of the present disclosure, at least one of the functions and operations of the server device 2000 may be implemented by the electronic device 1000 or the user device 3000. For example, the user device 3000 may directly receive the map data from the electronic device 1000 and may generate the floor plan image by using an artificial intelligence model stored in memory of the electronic device 1000.

In an embodiment of the present disclosure, the server device 2000 may manage user account information and information about the electronic device 1000 (e.g., a robot vacuum cleaner) and the user device 3000 (e.g., a smartphone, a wearable device, or a home appliance) connected to a user account. For example, a user may access the server device 2000 through the electronic device 1000 and/or the user device 3000 to generate the user account. The user account may be identified by an ID and a password set by the user. The server device 2000 may register the electronic device 1000 and/or the user device 3000 in the user account according to a determined procedure. For example, the server device 2000 may register the electronic device 1000 and/or the user device 3000 by connecting identification information (e.g., a serial number or a media access control (MAC) address) of the electronic device 1000 and/or the user device 3000 to the user account.

In an embodiment of the present disclosure, the electronic device 1000 and/or the user device 3000 may be carried by the user or may be provided the user's home or office. In FIG. 1, an example in which the electronic device 1000 is implemented as a robot vacuum cleaner and an example in which the user device 3000 is implemented as a smartphone are illustrated, but are not limited thereto, and the electronic device 1000 and/or the user device 3000 may include a personal computer (PC), a terminal, a portable telephone, a smartphone, a tablet PC, a handheld device, or a wearable device.

According to an embodiment of the present disclosure, by providing the floor plan image to the user by using the map data, visibility and intuitiveness of an actual cleaning area of the robot vacuum cleaner may be increased.

According to an embodiment of the present disclosure, information about a home appliance or furniture may be provided through a user interface together with the floor plan image, thereby providing the user with a visual control experience of the home appliance or furniture.

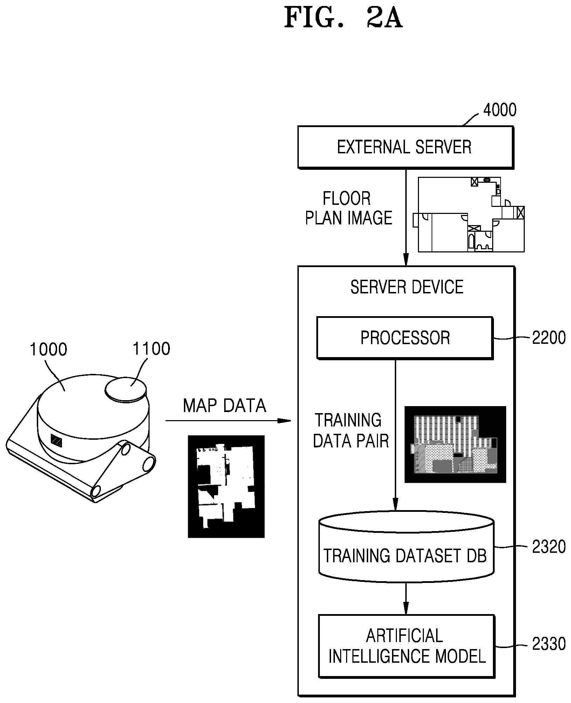

FIG. 2A is a block diagram for describing an operation of a server device performing a method of aligning map data with a floor plan image, according to an embodiment of the present disclosure. Configurations, operations, and functions of the electronic device 1000 and the server device 2000 may correspond to the configurations, operations, and functions of the electronic device 1000 and the server device 2000 of FIG. 1. For convenience of description, details overlapping those described with reference to FIG. 1 will be omitted.

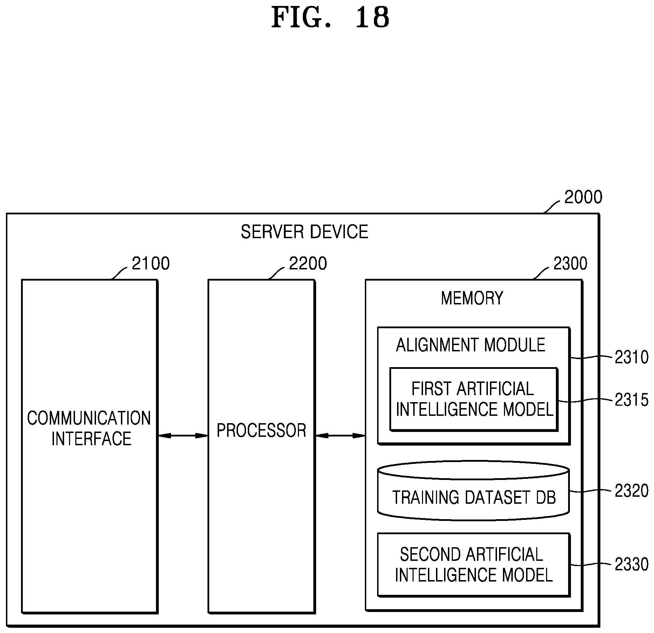

Referring to FIG. 2A, the server device 2000 may include a processor 2200, a training dataset database (DB) 2320, and an artificial intelligence model 2330. However, not all illustrated components are essential components. The server device 2000 may be implemented by more components than the illustrated components, or the server device 2000 may be implemented by fewer components than the illustrated components. Specific components of the server device 2000 will be described in detail with reference to FIG. 18.

The processor 2200 may control overall operations of the server device 2000. In an embodiment of the present disclosure, the processor 2200 may include an artificial intelligence (AI) processor. The AI processor may be manufactured in the form of a dedicated hardware chip for artificial intelligence, or may be manufactured as a part of an existing general-purpose processor (e.g., a CPU or an application processor) or a graphic-dedicated processor (e.g., a GPU) and mounted on the server device 2000. For example, the AI processor may perform an operation (e.g., a learning operation or an inference operation) related to the artificial intelligence model 2330.

In an embodiment of the present disclosure, the server device 2000 may train the artificial intelligence model by using the map data. The server device 2000 may obtain the floor plan image from an external server 4000. In the present disclosure, the floor plan image may represent a floor plan image corresponding to an indoor space in which the electronic device 1000 is arranged and travels. The server device 2000 may align the map data with the floor plan image. For example, the external server 4000 may include an application program interface (API) that provides a floor plan image for any building.

In an embodiment of the present disclosure, the server device 2000 may configure the aligned map data (or the aligned image) and the floor plan image as one training data pair. The server device 2000 may store the training data pair in the training dataset DB 2320. The server device 2000 may train the artificial intelligence model 2330 by using a training dataset including a plurality of training data pairs.

In an embodiment of the present disclosure, the external server 4000 may include the user device 3000 of FIG. 1. For example, the server device 2000 may receive the floor plan image from the user device 3000 of FIG. 1. For example, the user device 3000 of FIG. 1 may obtain the floor plan image from the user through an input/output interface. The user device (3000 of FIG. 1) may transmit the floor plan image to the server device 2000.

In an embodiment of the present disclosure, the user device 3000 of FIG. 1 may obtain an address of a place where the electronic device 1000 is arranged, through the input/output interface. The user device 3000 may transmit the address of the place to the server device 2000. The server device 2000 may request another external server (e.g., a floor plan image providing API) for the floor plan image corresponding to the address of the place. The server device 2000 may receive the requested floor plan image from another external server (not shown).

In an embodiment of the present disclosure, the user device 3000 may receive the floor plan image corresponding to the address of the place from another external server (not shown). The user device 3000 may transmit the floor plan image to the server device 2000.

In an embodiment of the present disclosure, unlike illustrated, the server device 2000 may include a floor plan image DB. The server device 2000 may load the floor plan image corresponding to the map data from the floor plan image DB instead of the external server 4000.

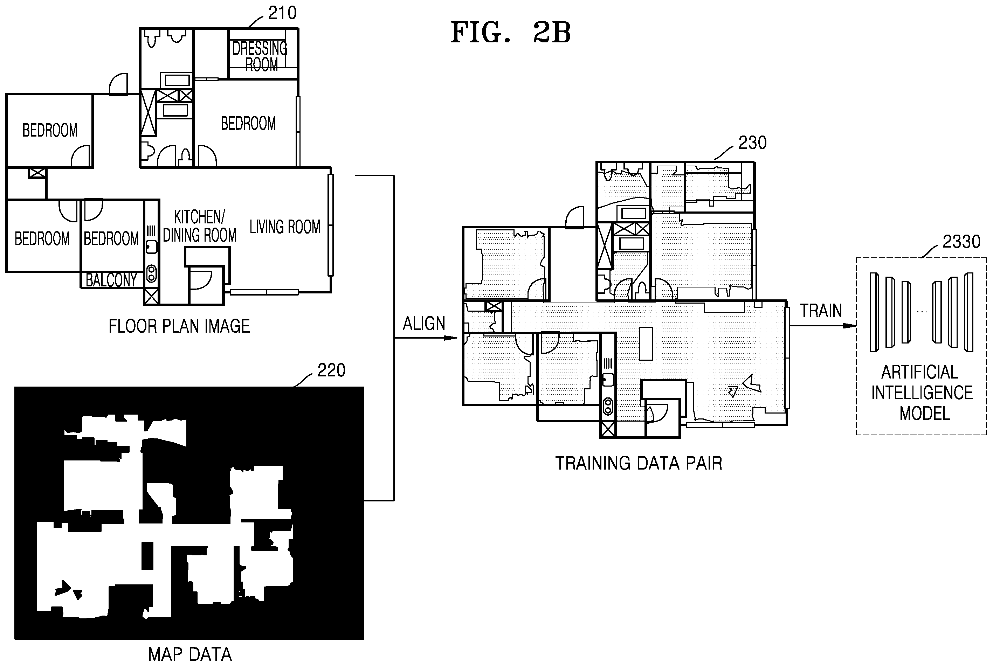

FIG. 2B is a conceptual diagram for describing a method of aligning map data with a floor plan image and a method of training an artificial intelligence model by using an aligned image, according to an embodiment of the present disclosure. For convenience of description, details overlapping those described with reference to FIGS. 1 and 2A will be omitted.

Referring to FIG. 2A together with FIG. 2B, the server device 2000 may receive a floor plan image 210 and map data 220. The floor plan image 210 and the map data 220 may correspond to each other. The server device 2000 may generate an image corresponding to the map data 220. For example, the map data 220 may include information about a scanned area (e.g., a white area) and an unscanned area (e.g., a black area).

In an embodiment of the present disclosure, the server device 2000 may align the map data 220 with the floor plan image 210. For example, the server device 2000 may align the map data 220 with the floor plan image 210 by using rotation, flipping, scaling, translation (transformation), or a combination thereof, but the present disclosure is not limited thereto. For example, the server device 2000 may perform various alignment techniques, such as warping, blurring, color adjustment, saturation adjustment, and noise removal, on the map data 220.

In an embodiment of the present disclosure, the server device 2000 may preprocess the floor plan image 210 and then align the map data 220 with the preprocessed floor plan image. For example, the server device 2000 may remove unnecessary components (e.g., numbers, letters, and door marks) from the floor plan image 210. For example, the server device 2000 may perform binarization on a color floor plan image to transform the color floor plan image into a black-and-white image.

In an embodiment of the present disclosure, the server device 2000 may store the map data aligned with the floor plan image 210 and the floor plan image 210 as one training data pair 230. The server device 2000 may train the artificial intelligence model 2330 by using the training data pair 230. The artificial intelligence model 2330 may calculate a loss value between the aligned map data, which is an input value, and the floor plan image 210, which is a ground truth value. The artificial intelligence model 2330 may update a weight and/or a bias of at least one layer of the artificial intelligence model 2330, based on the loss value.

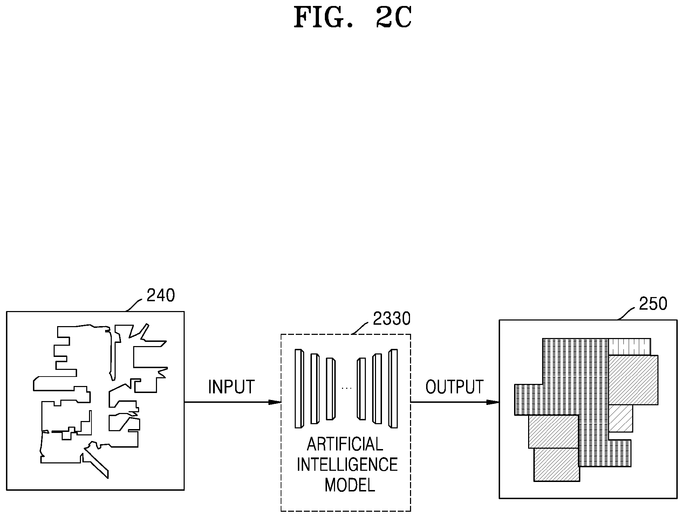

FIG. 2C is a conceptual diagram for describing a method of generating a floor plan image from map data, according to an embodiment of the present disclosure. For convenience of description, details overlapping those described with reference to FIGS. 1 to 2B will be omitted.

Referring to FIG. 1 together with FIG. 2C, the server device 2000 may receive target map data 240 from the electronic device 1000. For example, the target map data 240 may indicate map data obtained when the electronic device 1000 travels a target indoor space.

In an embodiment of the present disclosure, the server device 2000 may preprocess the target map data 240. For example, the server device 2000 may perform rotation, flipping, scaling, translating (transformation), or a combination thereof on the target map data 240.

In an embodiment of the present disclosure, the server device 2000 may input the target map data 240 to the trained artificial intelligence model 2330. The trained artificial intelligence model 2330 may infer a target floor plan image 250 based on the target map data 240.

In an embodiment of the present disclosure, the trained artificial intelligence model 2330 may infer segmentation information of the target floor plan image 250. For example, the segmentation information may include classification information for dividing an indoor space corresponding to the target floor plan image 250 into a plurality of areas, and location information about a boundary of each of the plurality of areas. For example, the plurality of areas may include at least one of a background area, a room, a living room, a closet (or a dressing room), a kitchen, a bathroom, a wall, a door, a window, a balcony, or a front door. However, the present disclosure is not limited thereto, and the indoor space may be divided into any areas according to a setting of a manufacturer or the user.

In an embodiment of the present disclosure, the trained artificial intelligence model 2330 may include a plurality of artificial intelligence models with different purposes. For example, the trained artificial intelligence model 2330 may include an image-to-image model and an image segmentation model. The image-to-image model may infer the target floor plan image 250 by using the target map data 240 as an input. The image segmentation model may infer segmentation information about an indoor space by using the target floor plan image 250 or the target map data 240 as an input.

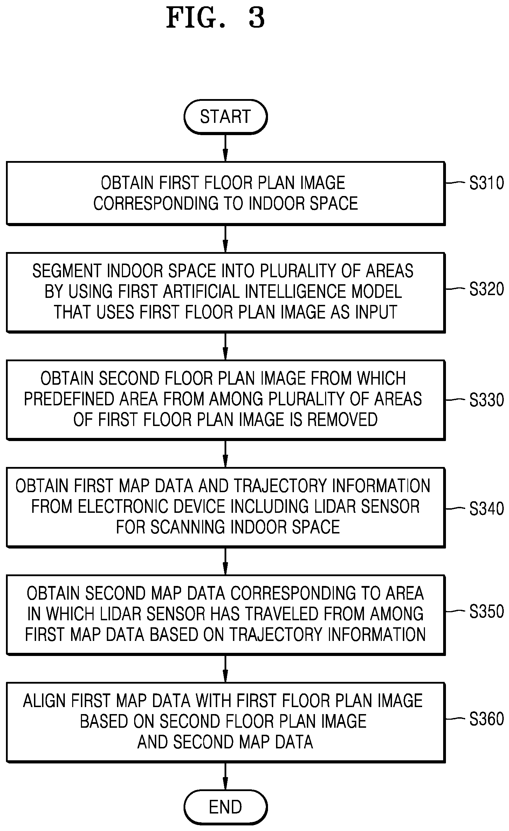

FIG. 3 is a flowchart for describing a method of aligning map data with a floor plan image, according to an embodiment of the present disclosure. Details overlapping those described with reference to FIGS. 1 to 2C will be omitted. For convenience of description, FIG. 3 will be described with reference to FIG. 2A.

Referring to FIG. 3, the method of aligning map data with a floor plan image may include operations S310 to S360. In an embodiment of the present disclosure, operations S310 to S360 may be performed by the server device 2000 or the processor 2200 of the server device 2000. However, the present disclosure is not limited thereto, and operations S310 to S360 may be performed by any electronic device (e.g., the electronic device 1000 or the user device 3000 of FIG. 1). The method of aligning map data with a floor plan image, according to an embodiment of the present disclosure, is not limited to that illustrated in FIG. 3, and any one of the operations illustrated in FIG. 3 may be omitted or an operation not illustrated in FIG. 3 may be further included.

In operation S310, the server device 2000 may obtain a first floor plan image corresponding to an indoor space. The server device 2000 may receive the first floor plan image from the external server 4000. The server device 2000 may request the external server 4000 for the first floor plan image mapped to an address corresponding to the indoor space. The server device 2000 may provide the address corresponding to the indoor space to the external server 4000. The external server 4000 may transmit the first floor plan image to the server device 2000 in response to the address corresponding to the indoor space.

In operation S320, the server device 2000 may segment the indoor space into a plurality of areas by using a first artificial intelligence model that receives the first floor plan image as an input. The first artificial intelligence model may be a model pre-trained to output segmentation information by using a floor plan image as an input. For example, the first artificial intelligence model may output segmentation information by using the first floor plan image as an input. For example, the segmentation information may include classification information (e.g., a category of an area) for dividing the indoor space corresponding to the first floor plan image into the plurality of areas, and location information (e.g., a bounding box) about a boundary of each of the plurality of areas.

In operation S330, the server device 2000 may obtain a second floor plan image in which a predefined area from among the plurality of areas of the first floor plan image has been removed. The server device 2000 may remove the predefined area from among the plurality of areas of the first floor plan image on the basis of the segmentation information. The server device 2000 may generate the second floor plan image based on a result of the removal. The plurality of areas may vary according to a setting of the manufacturer or the user. For example, the plurality of areas may include at least one of a room, a living room, a kitchen, a bathroom, a balcony, or a front door, but the present disclosure is not limited thereto. The predefined area may vary according to the setting of the manufacturer or the user. For example, the predefined area may include a balcony and a bathroom. In this case, the server device 2000 may delete an area corresponding to the balcony and an area corresponding to the bathroom from the first floor plan image.

In operation S340, the server device 2000 may obtain first map data and trajectory information from the electronic device 1000 including the LiDAR sensor 1100 for scanning the indoor space. The electronic device 1000 may obtain LiDAR scan data by using the LiDAR sensor 1100. The electronic device 1000 may obtain the first map data and the trajectory information based on the LiDAR scan data. For example, the trajectory information may indicate information obtained by accumulating coordinate values of the LiDAR sensor 1100 in a coordinate system corresponding to the first map data. The electronic device 1000 may transmit the first map data and the trajectory information to the server device 2000. The server device 2000 may receive the first map data and the trajectory information.

In operation S350, the server device 2000 may obtain, based on the trajectory information, second map data corresponding to an area in which the LiDAR sensor 1100 has traveled from among the first map data. For example, the server device 2000 may determine the area in which the LiDAR sensor 1100 has traveled, based on the trajectory information. The server device 2000 may remove, from the entire area corresponding to the first map data, an area excluding the area in which the LiDAR sensor 1100 has traveled. The server device 2000 may generate the second map data based on a result of the removal.

In operation S360, the server device 2000 may align the first map data with the first floor plan image based on the second floor plan image and the second map data. For example, the server device 2000 may align the second map data with the second floor plan image. The server device 2000 may obtain a transformation matrix for transforming an image corresponding to the second map data into the second floor plan image. The server device 2000 may align the first map data with the first floor plan image by applying the transformation matrix to the first map data.

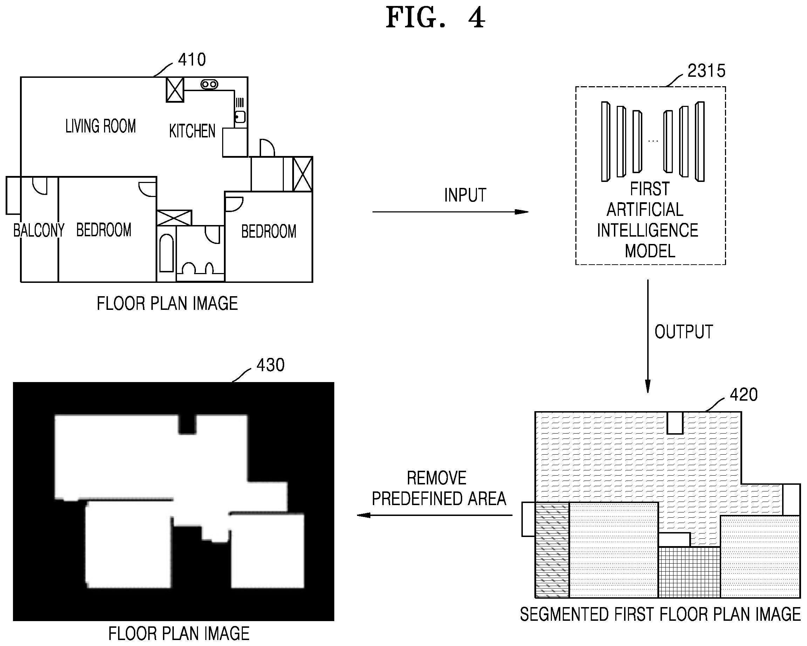

FIG. 4 is a conceptual diagram for describing preprocessing of a floor plan image by using segmentation, according to an embodiment of the present disclosure. Details overlapping those described with reference to FIGS. 1 to 3 will be omitted. For convenience of description, FIG. 4 will be described with reference to FIG. 2A.

Referring to FIG. 4, the server device 2000 may receive a first floor plan image 410. The server device 2000 may input the first floor plan image to a first artificial intelligence model 2315. The first artificial intelligence model 2315 may segment an indoor space corresponding to the first floor plan image based on the first floor plan image. For example, the first artificial intelligence model 2315 may segment the indoor space of the first floor plan image into a living room and a kitchen, a bathroom, a kitchen, and a balcony. The server device 2000 may remove a predefined area from a segmented first floor plan image 420. For example, the predefined area may be a balcony and a bathroom. The server device 2000 may remove an area corresponding to the balcony and an area corresponding to the bathroom from the segmented first floor plan image 420. The server device 2000 may generate a second floor plan image 430 based on a result of the removal.

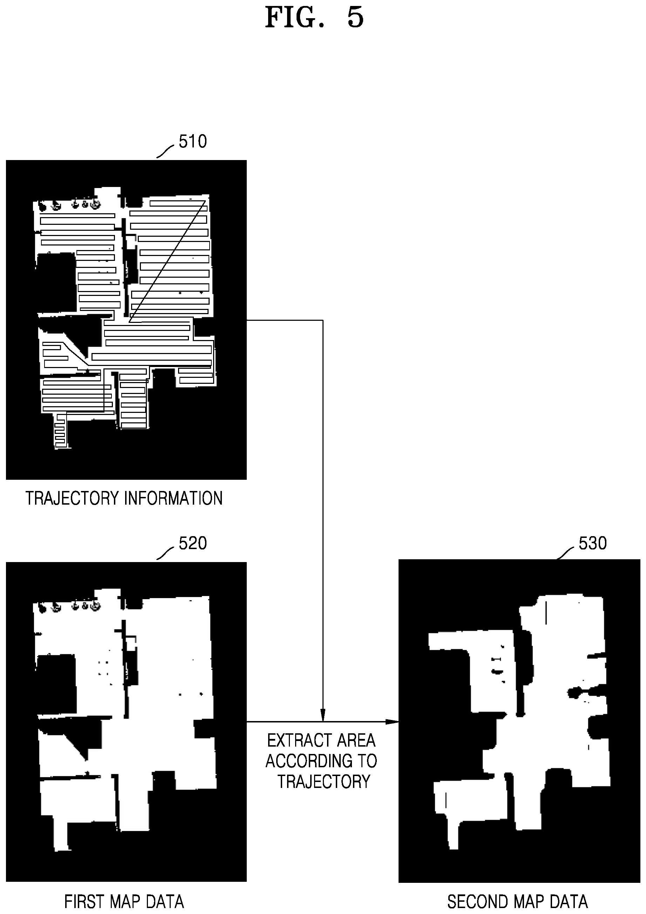

FIG. 5 is a conceptual diagram for describing preprocessing of map data by using a trajectory of a LiDAR sensor, according to an embodiment of the present disclosure. Details overlapping those described with reference to FIGS. 1 to 4 will be omitted. For convenience of description, FIG. 5 will be described with reference to FIG. 2A.

Referring to FIG. 5, the server device 2000 may receive trajectory information 510 and first map data 520 from the electronic device 1000. The server device 2000 may extract an area in which the electronic device 1000 (or the LiDAR sensor 1100 of the electronic device 1000) has traveled from an entire area corresponding to the first map data 520, based on the trajectory information. For example, the electronic device 1000 may not travel in a predefined no-travel area (e.g., a bathroom or a balcony) or a no-movement area (e.g., an obstacle arranged area or an outdoor area), which have been scanned by the LiDAR sensor 1100. The server device 2000 may remove an area in which the electronic device 1000 has not traveled from the entire area corresponding to the first map data. The server device 2000 may generate second map data 530 based on a result of the removal.

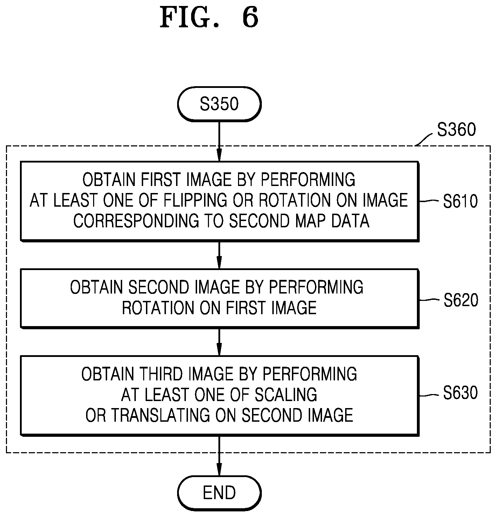

FIG. 6 is a flowchart for describing detailed operations included in operation S360 of FIG. 3. Details overlapping those described with reference to FIGS. 1 to 5 will be omitted. For convenience of description, FIG. 6 will be described with reference to FIGS. 2A and 3.

Referring to FIG. 6, operation S360 of FIG. 3 may include operations S610 to S630. In an embodiment of the present disclosure, operations S610 to S630 may be performed by the server device 2000 or the processor 2200 of the server device 2000. However, the present disclosure is not limited thereto, and operations S610 to S630 may be performed by any electronic device (e.g., the electronic device 1000 or the user device 3000 of FIG. 1). Detailed operations of operation S360 according to an embodiment of the present disclosure are not limited to those illustrated in FIG. 6, and any one of the operations illustrated in FIG. 6 may be omitted, or operations not illustrated in FIG. 6 may be further included.

In operation S610, the server device 2000 may obtain a first image by performing at least one of flipping or rotation on the image corresponding to the second map data. For example, the flipping may include at least one of upside-down flipping or left-right flipping. For example, the rotation may include at least one of 90° rotation, 180° rotation, or 270° rotation. The server device 2000 may obtain a plurality of candidate images based on a result of performing the flipping and the rotation. The server device 2000 may obtain the first image having a highest degree of matching with the second floor plan image from among the plurality of candidate images.

In operation S620, the server device 2000 may obtain a second image by performing rotation on the first image. For example, the rotation may include a -45° or 45° rotation. However, the present disclosure is not limited thereto, and a rotation angle in operation S620 may vary according to the setting of the manufacturer or the user. The server device 2000 may obtain a plurality of candidate images based on a result of the rotation. The server device 2000 may obtain the second image (or a rotation angle corresponding to the second image) with a highest degree of matching with the second floor plan image from among the plurality of candidate images.

In operation S630, the server device 2000 may obtain a third image by performing at least one of scaling or translating on the second image. For example, the scaling may include adjusting at least one of a height or a width of the second image. For example, the translating may include translating based on at least one of a horizontal axis or a vertical axis of the second image. The server device 2000 may obtain a plurality of candidate images based on at least one of a result of the scaling or a result of the translating. The server device 2000 may obtain the third image (or a scaling value and/or a translating value corresponding to the third image) having a highest degree of matching with the second floor plan image from among the plurality of candidate images.

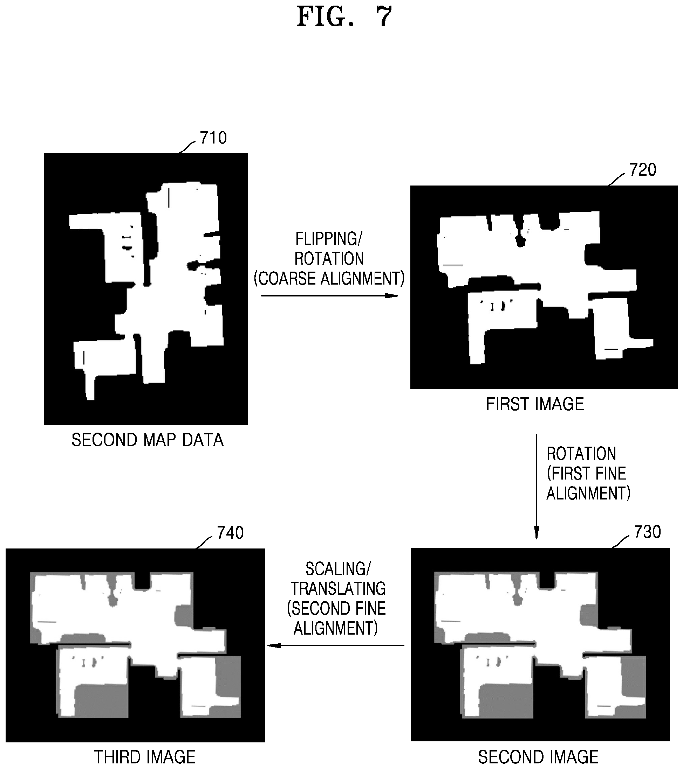

FIG. 7 is a conceptual diagram for describing a method of aligning map data with a floor plan image, according to an embodiment of the present disclosure. Details overlapping those described with reference to FIGS. 1 to 6 will be omitted. For convenience of description, FIG. 7 will be described with reference to FIG. 2A.

The server device 2000 may perform coarse alignment and fine alignment to align an image 710 corresponding to the second map data with the second floor plan image. For example, the coarse alignment may indicate alignment by at least one of upside-down flipping, left-right flipping, 90° rotation, 180° rotation, or 270° rotation. For example, the fine alignment may indicate alignment by at least one of -45° or 45° rotation, scaling, or translating. According to an embodiment of the present disclosure, by performing the coarse alignment first and then performing the fine alignment, it is possible to efficiently align images in terms of speed and cost.

The server device 2000 may perform the coarse alignment. For example, the server device 2000 may obtain a first image 720 by performing at least one of flipping or rotation on the image 710 corresponding to the second map data. The server device 2000 may obtain the first image 720 based on a result of at least one of the flipping or the rotation. For example, the first image 720 may indicate an image having a highest degree of matching with the second floor plan image from among images corresponding to a combination of predefined flipping and predefined rotation. For example, the server device 2000 may obtain the first image 720 by performing 270° rotation in a clockwise direction.

The server device 2000 may perform first fine alignment. For example, the server device 2000 may obtain a second image 730 by performing rotation on the first image 720. For example, the second image 730 may indicate an image obtained by rotating the first image 720 by an angle having a highest degree of matching with the second floor plan image within a predefined angle range. For example, the server device 2000 may obtain the second image 730 by performing clockwise rotation by a certain angle.

The server device 2000 may perform second fine alignment. For example, the server device 2000 may obtain a third image 740 by performing at least one of scaling or translating on the second image 730. For example, the third image 740 may indicate an image obtained by processing the second image 730 with a scaling value and/or a translating value having a highest degree of matching with the second floor plan image within a predefined scaling range and/or a predefined translating range. In an embodiment of the present disclosure, the server device 2000 may obtain an inverse image in which an image pixel value has been inverted by performing inverse filtering on the second floor plan image. For example, the third image 740 may indicate an image obtained by processing the second image 730 with a scaling value and/or a translating value having a lowest degree of matching with the inverse image within a predefined scaling range and/or a predefined translating range. In an embodiment of the present disclosure, the server device 2000 may determine the third image 740 based on a weighted sum of a value corresponding to how high a degree of matching with the second floor plan image is and a value corresponding to how low a degree of matching with the inverse image is.

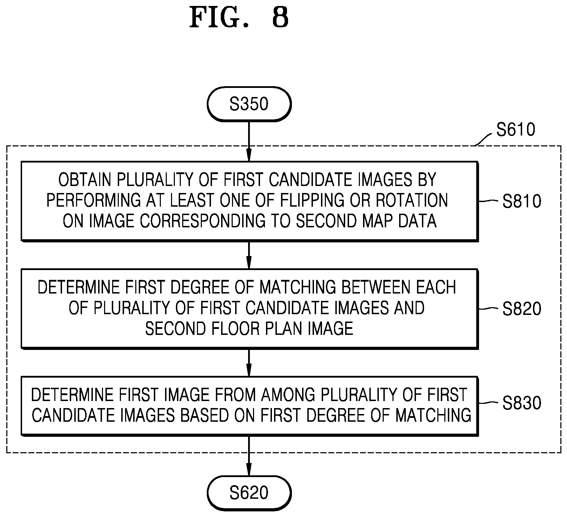

FIG. 8 is a flowchart for describing detailed operations included in operation S610 of FIG. 6. Details overlapping those described with reference to FIGS. 1 to 7 will be omitted. For convenience of description, FIG. 8 will be described with reference to FIGS. 2A, 3, and 6.

Referring to FIG. 8, operation S610 of FIG. 6 may include operations S810 to S830. In an embodiment of the present disclosure, operations S810 to S830 may be performed by the server device 2000 or the processor 2200 of the server device 2000. However, the present disclosure is not limited thereto, and operations S810 to S830 may be performed by any electronic device (e.g., the electronic device 1000 or the user device 3000 of FIG. 1). Detailed operations of operation S610 according to an embodiment of the present disclosure are not limited to those illustrated in FIG. 8, and any one of the operations illustrated in FIG. 8 may be omitted, or operations not illustrated in FIG. 8 may be further included.

In operation S810, the server device 2000 may obtain a plurality of first candidate images by performing at least one of flipping or rotation on the image corresponding to the second map data. The server device 2000 may obtain the plurality of first candidate images by removing an overlapping image from a list of images obtained by performing at least one of flipping or rotation on the image corresponding to the second map data.

In operation S820, the server device 2000 may determine a first degree of matching between each of the plurality of first candidate images and the second floor plan image. In an embodiment of the present disclosure, the first degree of matching may indicate an intersection over union (IoU) value. An IoU value may indicate the size of an intersection area of a plurality of images compared to the size of a union area of the plurality of images.

In operation S830, the server device 2000 may determine, based on the first degree of matching, the first image from among the plurality of first candidate images. The server device 2000 may determine an image having a highest first degree of matching from among the plurality of first candidate images as the first image.

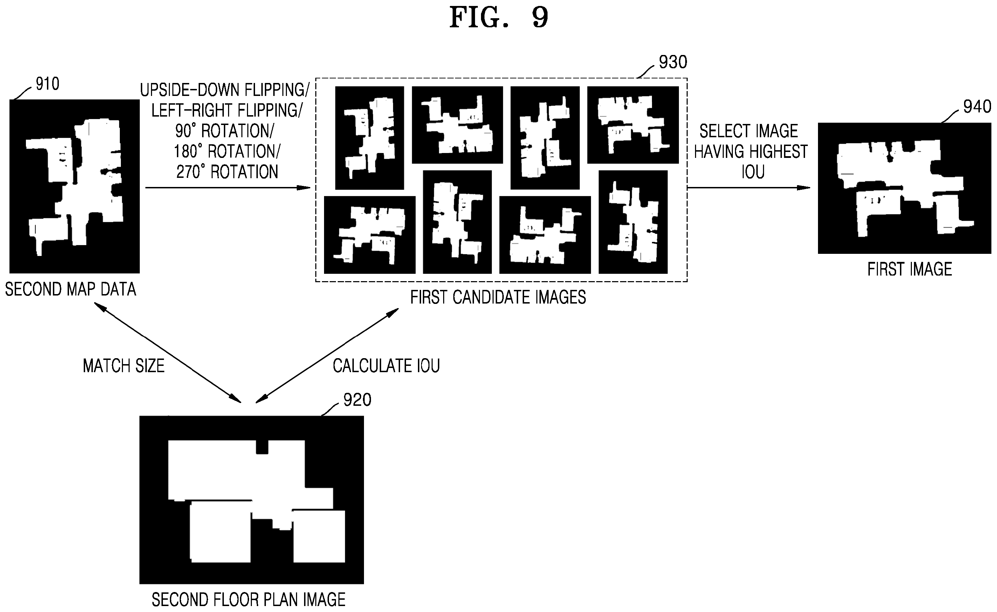

FIG. 9 is a conceptual diagram for describing a method of performing flipping and rotation on an image corresponding to map data and obtaining a first image, according to an embodiment of the present disclosure. Details overlapping those described with reference to FIGS. 1 to 8 will be omitted. For convenience of description, FIG. 9 will be described with reference to FIG. 2A.

Referring to FIG. 9, the server device 2000 may match a size (e.g., a height, a width, or a width) between an image 910 corresponding to second map data and a second floor plan image 920. The server device 2000 may flip the image 910 corresponding to the second map data. For example, the flipping may include at least one of upside-down flipping or left-right flipping. The server device 2000 may rotate the image 910 corresponding to the second map data by a predefined angle. For example, the rotation by the predefined angle may include at least one of 90° rotation, 180° rotation, or 270° rotation.

For example, the server device 2000 may obtain first candidate images 930 by performing at least one of upside-down flipping, left-right flipping, 90° rotation, 180° rotation, or 270° rotation on the image 910 corresponding to the second map data. The server device 2000 may remove overlapping images by performing at least one of upside-down flipping, left-right flipping, 90° rotation, 180° rotation, or 270° rotation. Although a total of eight first candidate images 930 are illustrated, the number of the first candidate images 930 may vary depending on whether an image is flipped and/or a rotation angle.

The server device 2000 may calculate an IoU value for each of the second floor plan image 920 (or a binarized second floor plan image) and the first candidate images 930. The server device 2000 may select an image having a highest IoU value from among the first candidate images 930 as a first image 940. In an embodiment of the present disclosure, the server device 2000 may extract an index corresponding to the first image 940 from a list of images corresponding to the first candidate images 930. For example, an operation by which the server device 2000 extracts the index corresponding to the first image 940 may follow Equation 1. ${argmax}_{i} \left(IoU\left({FP}_{binary}, {LiDAR}_{i}\right)\right)$

Referring to Equation 1, i is defined as an index of each of the first candidate images 930, LiDARᵢ is defined as a first candidate image having an index of i, FP_{binary} is defined as a binarized second floor plan image, IoU is defined as a function of calculating an IoU value between operands, and argmaxᵢ is defined as a function of calculating an index of a first candidate image (i.e., a first image) having a highest IoU value.

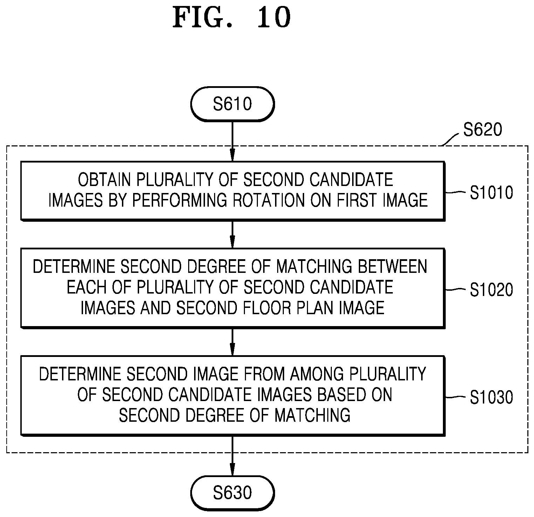

FIG. 10 is a flowchart for describing detailed operations included in operation S620 of FIG. 6. Details overlapping those described with reference to FIGS. 1 to 9 will be omitted. For convenience of description, FIG. 10 will be described with reference to FIGS. 2A, 3, and 6.

Referring to FIG. 10, operation S620 of FIG. 6 may include operations S1010 to S1030. In an embodiment of the present disclosure, operations S1010 to S1030 may be performed by the server device 2000 or the processor 2200 of the server device 2000. However, the present disclosure is not limited thereto, and operations S1010 to S1030 may be performed by any electronic device (e.g., the electronic device 1000 or the user device 3000 of FIG. 1). Detailed operations of operation S620 according to an embodiment of the present disclosure are not limited to those illustrated in FIG. 10, and any one of the operations illustrated in FIG. 10 may be omitted, or operations not illustrated in FIG. 10 may be further included.

In operation S1010, the server device 2000 may obtain a plurality of second candidate images by performing rotation on the first image. The server device 2000 may obtain the plurality of second candidate images by rotating the first image by a plurality of predefined angles.

In operation S1020, the server device 2000 may determine a second degree of matching between each of the plurality of second candidate images and the second floor plan image. In an embodiment of the present disclosure, the second degree of matching may indicate the size of an intersection area between each of the plurality of second candidate images and the second floor plan image. For example, when both the plurality of second candidate images and the second floor plan image are binarized images, each pixel value of the image may be a first value or a second value. For example, the first value (e.g., "0") may be represented as a background area, and the second value (e.g., "1") may be represented as an indoor space area. For example, when pixel values of the same coordinates of the two images are all the second values (e.g., "1"), pixels of the corresponding coordinates may be included in the intersection area.

In operation S1030, the server device 2000 may determine, based on the second degree of matching, the second image from among the plurality of second candidate images. The server device 2000 may determine an image having a highest second degree of matching from among the plurality of second candidate images as the second image.

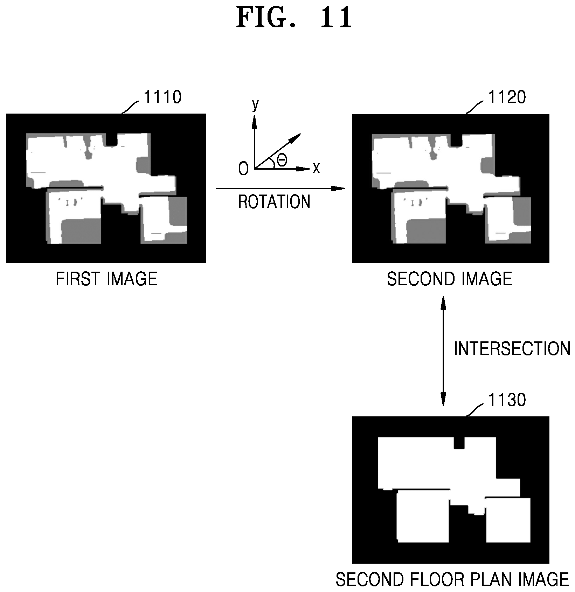

FIG. 11 is a conceptual diagram for describing a method of performing rotation on a first image and obtaining a second image, according to an embodiment of the present disclosure. Details overlapping those described with reference to FIGS. 1 to 10 will be omitted. For convenience of description, FIG. 11 will be described with reference to FIG. 2A.

Referring to FIG. 11, the server device 2000 may rotate the first image. For example, the server device 2000 may rotate the first image by a plurality of rotation angles within a predefined rotation range. The rotation angle may be arbitrarily selected within the predefined rotation range or may be predefined according to the setting of the manufacturer or the user. The server device 2000 may obtain the rotation angle. In an embodiment of the present disclosure, the server device 2000 may load the predefined rotation angle from memory. In an embodiment of the present disclosure, the server device 2000 may obtain the rotation angle by extracting any value from the predefined rotation range.

For example, the server device 2000 may rotate a first image 1110 by a rotation angle θ in a coordinate system in which a center point of the first image 1110 is an origin O. For example, the rotation angle θ may represent a degree of rotation in a counterclockwise direction from a positive direction of an x-axis, but the present disclosure is not limited thereto. In an embodiment of the present disclosure, the plurality of rotation angles may vary according to the setting of the manufacturer or the user.

The server device 2000 may obtain a list of images including second candidate images rotated by the plurality of rotation angles. The server device 2000 may determine the size of an intersection area between each of the second candidate images and a second floor plan image 1130. The server device 2000 may select an image having a largest size of the intersection area from among the second candidate images as a second image 11200. In an embodiment of the present disclosure, the server device 2000 may extract a rotation angle corresponding to the second image 1120 from the list of images corresponding to the second candidate images. For example, an operation by which the server device 2000 extracts the rotation angle corresponding to the second image 1120 may follow Equation 2. ${argmax}_{R} \left(intersection\left({FP}_{binary},{M}_{R}\left(LiDAR\right)\right)\right)$

Referring to Equation 2, R is defined as the rotation angle corresponding to each of the second candidate images, LiDAR is defined as the first image 1110, FP_{binary} is defined as the binarized second floor plan image, intersection is defined as a function of calculating the size of an intersection area between operands, and argmax_{R} is defined as a function of extracting the index of the second candidate image (i.e., the second image) having a largest size of the intersection area.

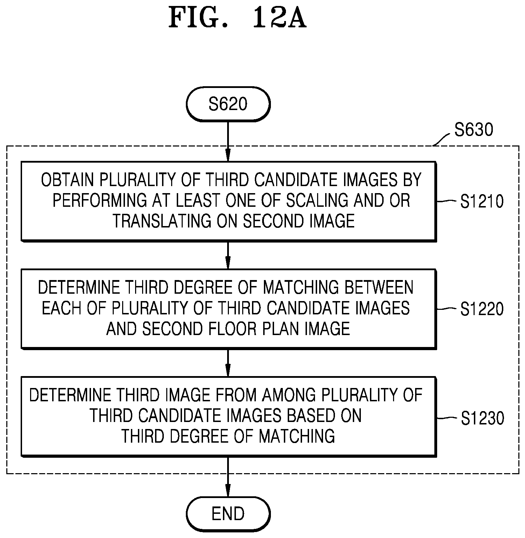

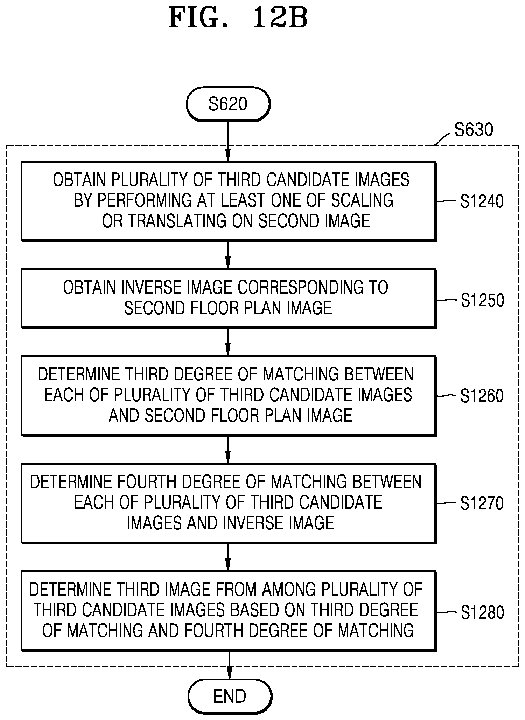

FIGS. 12A and 12B are flowcharts for describing detailed operations included in operation S630 of FIG. 6. Details overlapping those described with reference to FIGS. 1 to 11 will be omitted. For convenience of description, FIGS. 12A and 12B will be described with reference to FIGS. 2A, 3, and 6.

Referring to FIG. 12A, operation S630 of FIG. 6 may include operations S1210 to S1230. In an embodiment of the present disclosure, operations S1210 to S1230 may be performed by the server device 2000 or the processor 2200 of the server device 2000. However, the present disclosure is not limited thereto, and operations S1210 to S1230 may be performed by any electronic device (e.g., the electronic device 1000 or the user device 3000 of FIG. 1). Detailed operations of operation S630 according to an embodiment of the present disclosure are not limited to those illustrated in FIG. 12A, and any one of the operations illustrated in FIG. 12A may be omitted, or operations not illustrated in FIG. 12A may be further included.

In operation S1210, the server device 2000 may obtain a plurality of third candidate images by performing at least one of scaling or translating on the second image. The server device 2000 may obtain the plurality of third candidate images by performing scaling and/or translating on the second image by using a predefined value. For example, the server device 2000 may adjust a height and/or a width of the second image within a predefined scaling range. For example, the server device 2000 may translate a pixel value of the second image within a predefined translating range.

In operation S1220, the server device 2000 may determine a third degree of matching between each of the plurality of third candidate images and the second floor plan image. In an embodiment of the present disclosure, the third degree of matching may indicate the size of an intersection area between each of the plurality of third candidate images and the second floor plan image. For example, when both the plurality of third candidate images and the second floor plan image are binarized images, each pixel of the image may have a first value or a second value. For example, the first value (e.g., "0") may be represented as a background area, and the second value (e.g., "1") may be represented as an indoor space area. For example, when both of the same pixel coordinate values of the two images have the second value (e.g., "1"), the corresponding pixel coordinate value may be included in the intersection area.

In operation S1230, the server device 2000 may determine, based on the third degree of matching, the third image from among the plurality of third candidate images. The server device 2000 may determine an image having a highest third degree of matching from among the plurality of third candidate images as the third image.

Referring to FIG. 12B, operation S630 of FIG. 6 may include operations S1240 to S1280. In an embodiment of the present disclosure, operations S1240 to S1280 may be performed by the server device 2000 or the processor 2200 of the server device 2000. However, the present disclosure is not limited thereto, and operations S1240 to S1280 may be performed by any electronic device (e.g., the electronic device 1000 or the user device 3000 of FIG. 1). Detailed operations of operation S630 according to an embodiment of the present disclosure are not limited to those illustrated in FIG. 12B, and any one of the operations illustrated in FIG. 12B may be omitted, or operations not illustrated in FIG. 12B may be further included.

The function and operation of the server device 2000 in operation S1240 correspond to the function and operation of the server device 2000 in operation S1210 of FIG. 12A, and thus, descriptions thereof are omitted.

In operation S1250, the server device 2000 may obtain an inverse image corresponding to the second floor plan image. The server device 2000 may obtain the inverse image by applying inverse filtering to the second floor plan image. For example, all pixel values of the inverse image may be different from all pixel values of the second floor plan image. For example, when a pixel value of a specific coordinate of the inverse image is a first value, a pixel value of the corresponding coordinate of the second floor plan image may be a second value.

The function and operation of the server device 2000 in operation S1260 correspond to the function and operation of the server device 2000 in operation S1220 of FIG. 12A, and thus, descriptions thereof are omitted.

In operation S1270, the server device 2000 may determine a fourth degree of matching between each of the plurality of third candidate images and the inverse image. In an embodiment of the present disclosure, the fourth degree of matching may indicate the size of an intersection area between each of the plurality of third candidate images and the second floor plan image.

In operation S1280, the server device 2000 may determine, based on the third degree of matching, the third image from among the plurality of third candidate images and the fourth degree of matching. The server device 2000 may calculate a weighted sum of a value corresponding to how high the third degree of matching is and a value corresponding to how low the fourth degree of matching is, with respect to each of the plurality of third candidate images. A weight corresponding to the weighted sum may vary according to the setting of the manufacturer or the user. The server device 2000 may determine an image having a largest weighted sum as the third image from among the plurality of third candidate images.

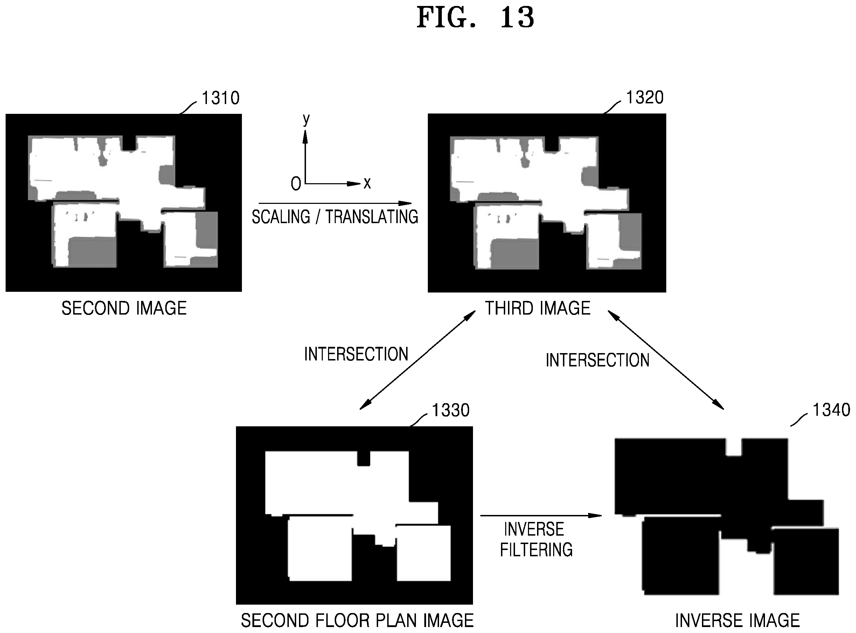

FIG. 13 is a conceptual diagram for describing a method of performing scaling and translation on a second image and obtaining a third image, according to an embodiment of the present disclosure. Details overlapping those described with reference to FIGS. 1 to 12 will be omitted. For convenience of description, FIG. 13 will be described with reference to FIG. 2A.

Referring to FIG. 13, the server device 2000 may perform at least one of scaling or translating on a second image 1310. The server device 2000 may adjust a height and/or a width of the second image 1310 by a predefined scaling value (or may also be referred to as a scaling factor). For example, the server device 2000 may adjust the size of the second image 1310 by multiplying the current height and/or the current width of the second image 1310 by the predefined scaling value. The server device 2000 may translate the second image 1310 in a certain direction (e.g., a horizontal direction and/or a vertical direction) by a predefined translating value. For example, the server device 2000 may move a pixel value of the second image 1310 to a location obtained by adding the predefined translating value to a current location value (or a coordinate value) of the corresponding pixel.

The server device 2000 may obtain a scaling value and/or a translating value. In an embodiment of the present disclosure, the server device 2000 may load the predefined scaling value and/or the predefined translating value from the memory. In an embodiment of the present disclosure, the server device 2000 may obtain the scaling value and/or the translating value by extracting an any value from a predefined range.

The server device 2000 may multiply a location value of each of pixels by the scaling value. For example, the server device 2000 may obtain a first scaling value corresponding to a positive direction of a horizontal axis (e.g., an x-axis) and a second scaling value corresponding to a positive direction of a vertical axis (e.g., a y-axis) in a coordinate system in which a center point of the second image 1310 is an origin O. It is assumed that a location value of a specific pixel of the second image 1310 is (a, b), the first scaling value is c, and the second scaling value is d. In this case, the location value of the corresponding pixel may be changed to (a*c, b*d). When the second image 1310 is enlarged or reduced, a pixel value of a new pixel may be obtained using various interpolation algorithms (e.g., nearest neighbor interpolation, bilinear interpolation, bicubic interpolation, Lanczos interpolation, pooling, Gaussian blur, or a combination thereof).

The server device 2000 may add the translating value to the location value of each of the pixels. For example, the server device 2000 may obtain a first translating value corresponding to the positive direction of the horizontal axis (e.g., the x-axis) and a second translating value corresponding to the positive direction of the vertical axis (e.g., the y-axis) in the coordinate system having the center point of the second image 1310 as the origin O. It is assumed that the location value of the specific pixel of the second image 1310 is (a, b), the first translating value is c, and the second translating value is d. In this case, the location value of the corresponding pixel may be changed to (a+c, b+d).

The server device 2000 may generate the plurality of third candidate images obtained by performing at least one of scaling or translating on the second image 1310 based on a plurality of scaling values and a plurality of translating values.

The server device 2000 may obtain a list of images including the third candidate images in which the scaling and/or the translating have been performed according to the plurality of scaling values and the plurality of translating values. The server device 2000 may determine the size of an intersection area between each of the third candidate images and a second floor plan image 1330. The server device 2000 may select an image having a largest size of the intersection area from among the third candidate images as a third image 1320. In an embodiment of the present disclosure, the server device 2000 may extract a translating value and a scaling value corresponding to the third image 1320 from the list of images corresponding to the third candidate images. For example, an operation by which the server device 2000 extracts the scaling value and the translating value corresponding to the third image 1320 may follow Equation 3. ${argmax}_{\left({s}_{x}, {s}_{y}, {t}_{x}, {t}_{y}\right)} \left(intersection\left({FP}_{binary}, {LiDAR}_{\left({s}_{x}, {s}_{y}, {t}_{x}, {t}_{y}\right)}\right)\right)$

Referring to Equation 3, sₓ is defined as a scaling value in the positive direction of the x-axis corresponding to each of the second candidate images, s_{y} is defined as a scaling value in the positive direction of the y-axis corresponding to each of the second candidate images, tₓ is defined as a translating value in the positive direction of the x-axis corresponding to each of the second candidate images, t_{y} is defined as a translating value in the positive direction of the y-axis corresponding to each of the second candidate images, LiDAR is defined as the first image 1110 of FIG. 11 or the second image 1310, FP_{binary} is defined as the binarized second floor plan image, intersection is defined as the function of calculating the size of the intersection area between the operands, and argmax_{R} is defined as a function of extracting an index of (sₓ, s_{y}, tₓ, t_{y}) of the third candidate image (i.e., the third image) having the largest size of the intersection area.

In an embodiment of the present disclosure, the server device 2000 may generate an inverse image 1340 by applying inverse filtering to the second floor plan image 1330. For example, when the second floor plan image 1330 is binarized, a pixel value (e.g., "0") of the inverse image 1340 may have a value inverted from a pixel value (e.g., "1") of the second floor plan image 1330. The server device 2000 may determine the size of an intersection area between each of the third candidate images and the inverse image 1340. The server device 2000 may select the third image 1320 from among the third candidate images, based on the size of the intersection area between each of the third candidate images and the second floor plan image 1330 and the size of the intersection area between each of the third candidate images and the inverse image 1340. In an embodiment of the present disclosure, the server device 2000 may extract a translating value and a scaling value corresponding to the third image 1320 from the list of images corresponding to the third candidate images. For example, an operation by which the server device 2000 extracts the scaling value and the translating value corresponding to the third image 1320 may follow Equation 4. Details overlapping those described with reference to Equation 3 will be omitted. ${argmin}_{\left({s}_{x}, {s}_{y}, {t}_{x}, {t}_{y}\right)} \left(intersection\left(INV\left({FP}_{binary}\right),{LiDAR}_{\left({s}_{x}, {s}_{y}, {t}_{x}, {t}_{y}\right)}\right)\right)$

Referring to Equation 4, INV is defined as a function of calculating inverse data of an operand, and thus, INV (FP_{binary}) is defined as the inverse image 1340 of the binarized second floor plan image.

In an embodiment of the present disclosure, the server device 2000 may select the third image 1320 having a largest weighted sum from among the third candidate images by applying a predefined weight to how large the size of the intersection area between each of the third candidate images and the second floor plan image 1330 is and how small the size of the intersection area between each of the third candidate images and the inverse image 1340 is.

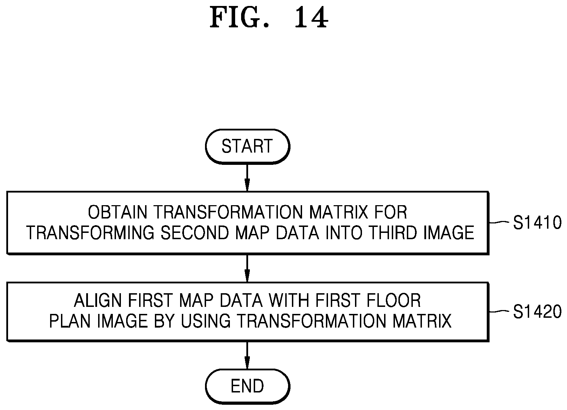

FIG. 14 is a flowchart for describing a method of aligning map data with a floor plan image by using a transformation matrix, according to an embodiment of the present disclosure. Details overlapping those described with reference to FIGS. 1 to 13 will be omitted. For convenience of description, FIG. 14 will be described with reference to FIGS. 2A, 3, and 6.

Referring to FIG. 14, operation S360 in FIG. 3 may include operations S610 to S630 in FIG. 6 and operations S1410 and S1420. In an embodiment of the present disclosure, operations S1410 and S1420 may be performed by the server device 2000 or the processor 2200 of the server device 2000. However, the present disclosure is not limited thereto, and operations S1410 and S1420 may be performed by any electronic device (e.g., the electronic device 1000 or the user device 3000 of FIG. 1). Detailed operations of operation S360 according to an embodiment of the present disclosure are not limited to those illustrated in FIG. 14, and any one of the operations illustrated in FIG. 14 may be omitted, or operations not illustrated in FIG. 14 may be further included.

In operation S1410, the server device 2000 may obtain a transformation matrix for transforming the second map data into the third image. For example, the transformation matrix may be a matrix representing a relationship between the image corresponding to the second map data and the third image. For example, the transformation matrix may correspond to an affine transformation. The transformation matrix may include parameters corresponding to at least one of a rotation angle, flipping, scaling, or translating required to transform an image.

In operation S1420, the server device 2000 may align the first map data with the first floor plan image by using the transformation matrix. For example, the server device 2000 may multiply an image corresponding to the first map data by the transformation matrix. The transformed image may be represented in the form aligned with the first floor plan image.

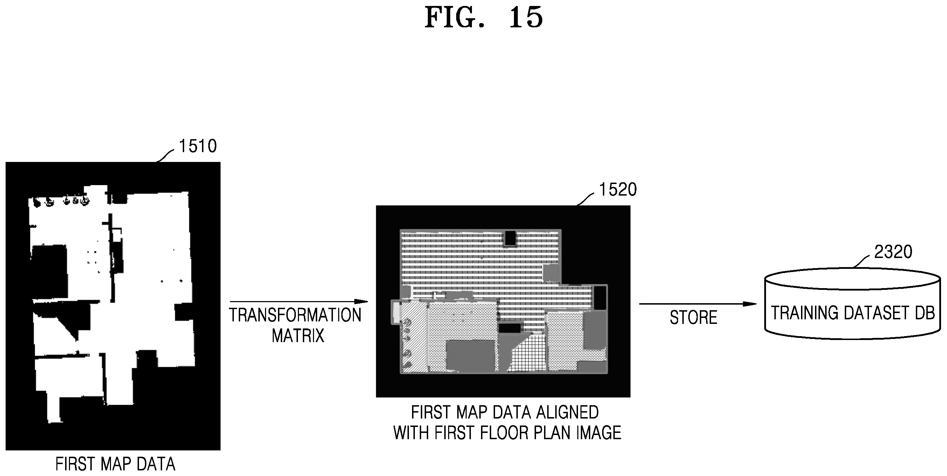

FIG. 15 is a conceptual diagram for describing a method of aligning map data with a floor plan image by using a transformation matrix, according to an exemplary embodiment of the present disclosure. Details overlapping those described with reference to FIGS. 1 to 14 will be omitted. For convenience of description, FIG. 15 will be described with reference to FIG. 2A.

Referring to FIG. 15, the server device 2000 may generate the transformation matrix based on the second floor plan image and the second map data. The server device 2000 may align an image 1510 corresponding to the first map data with the first floor plan image by using the transformation matrix. The server device 2000 may store a training data pair including an aligned image 1520 and the first floor plan image in the training dataset DB 2320.

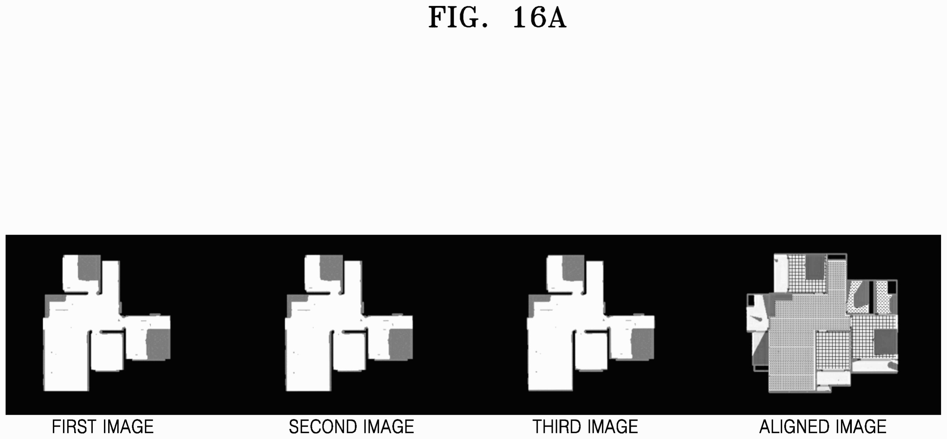

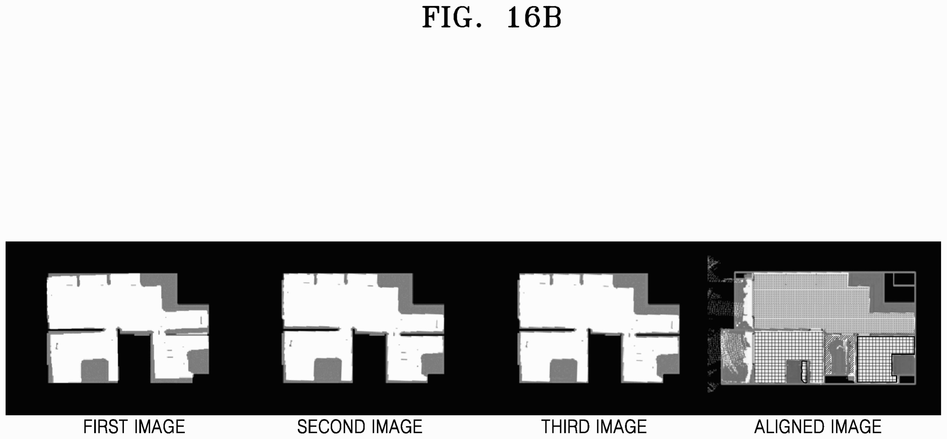

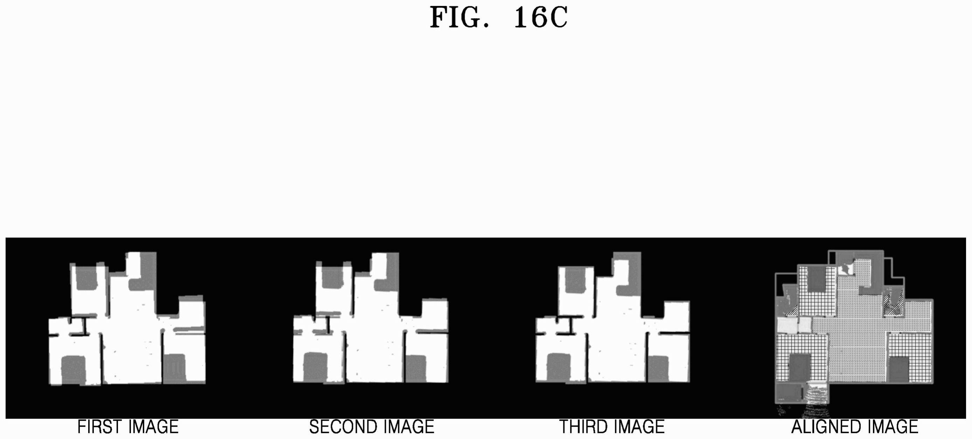

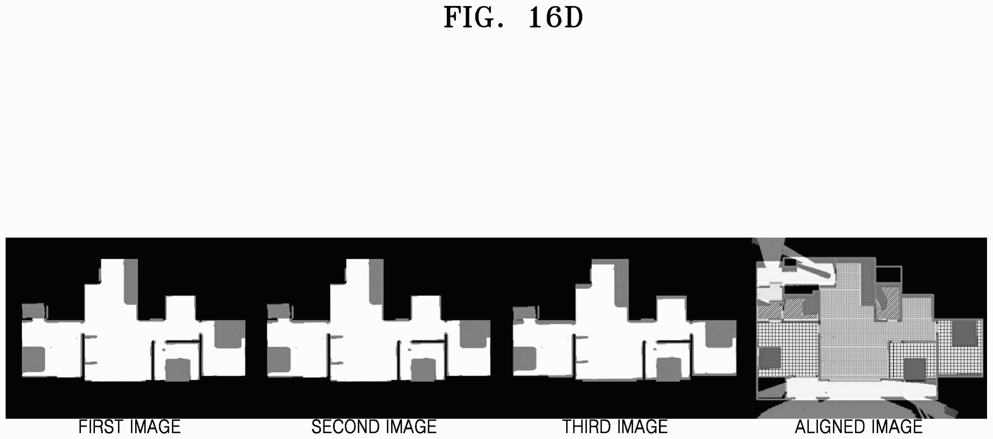

FIGS. 16A to 16D are diagrams illustrating examples of performing a method of aligning map data with a floor plan image, according to an embodiment of the present disclosure. Details overlapping those described with reference to FIGS. 1 to 15 will be omitted. For convenience of description, FIGS. 16A to 16D will be described with reference to FIG. 2A.

Referring to FIGS. 16A to 16C, the server device 2000 may generate the first image by performing coarse alignment, such as flipping and/or first rotation, on the second map data. The server device 2000 may generate the second image by performing fine alignment, such as second rotation, on the first image. A rotation angle of the second rotation may be less than a rotation angle of the first rotation. The server device 2000 may generate the third image by performing fine alignment, such as scaling and/or translating, on the second image. The server device 2000 may obtain the transformation matrix for transforming the second map data into the third image. The server device 2000 may transform the first map data by using the transformation matrix. The transformed first map data may be referred to as an image aligned with the first floor plan image.

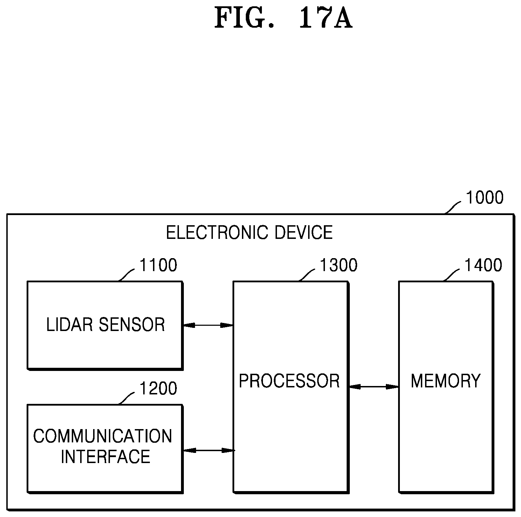

FIG. 17A is block diagram for describing components of an electronic device according to an embodiment of the present disclosure. Details overlapping those described with reference to FIGS. 1 to 16 will be omitted.

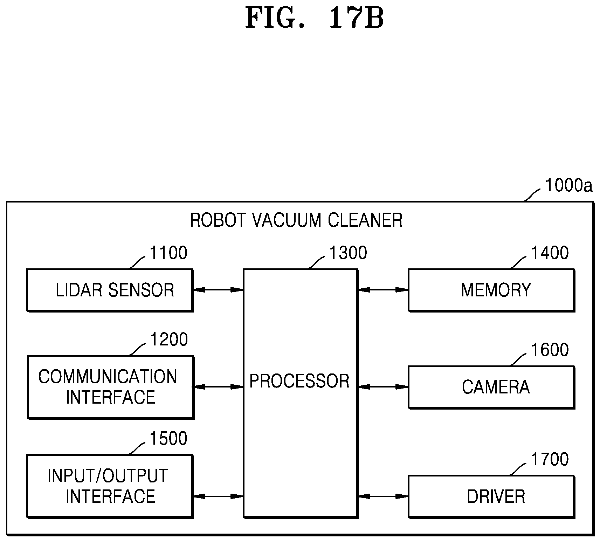

Referring to FIG. 1 together with FIG. 17A, the electronic device 1000 may include the LiDAR sensor 1100, a communication interface 1200, a processor 1300, and memory 1400. However, not all illustrated components are essential components. The electronic device 1000 may be implemented by more components than the illustrated components, or the electronic device 1000 may be implemented by fewer components than the illustrated components. For example, the electronic device 1000 according to an embodiment of the present disclosure may be implemented as a robot vacuum cleaner including an input/output interface 1500, a camera 1600, and a driver 1700 as illustrated in FIG. 17B.

The LiDAR sensor 1100 is a component for scanning a distance (or a depth) to a wall surface or an object in a surrounding space (e.g., an indoor space). The electronic device 1000 may measure a depth to an object with respect to a plurality of areas included in a specific space by using the LiDAR sensor 1100. The electronic device 1000 may generate map data corresponding to the space based on a depth value measured by the LiDAR sensor 1100 (or may also be referred to as LiDAR scan data).

The communication interface 1200 may include one or more components for performing communication between the electronic device 1000 and the server device 2000, between the electronic device 1000 and the user device 3000, and between the electronic device 1000 and the external server 4000 of FIG. 2A. For example, the communication interface 1200 may include a short-range wireless communication interface, a broadcast receiver, and the like, but is not limited thereto.

The short-range wireless communication interface may include a Bluetooth communication interface, a Bluetooth low energy (BLE) communication interface, a near field communication (NFC) interface, a wireless local area network (WLAN) (Wi-Fi) communication interface, a ZigBee communication interface, an infrared data association (IrDA) communication interface, a Wi-Fi direct communication interface, an ultra-wideband (UWB) communication interface, or an Ant+ communication interface, but is not limited thereto.

The broadcast receiver receives a broadcast signal and/or broadcast-related information from the outside through a broadcast channel. The broadcast channel may include a satellite channel and a terrestrial channel. Depending on an embodiment, the electronic device 1000 may not include the broadcast receiver.

In an embodiment of the present disclosure, the electronic device 1000 may transmit the map data and/or the LiDAR scan data to the server device 2000 through the communication interface 1200. The electronic device 1000 may transmit current state information (e.g., location information, power information, abnormality information, or trajectory information) of the electronic device 1000 to the server device 2000 through the communication interface 1200.

The processor 1300 may control overall operations of the electronic device 1000. For example, the processor 1300 may generally control the LiDAR sensor 1100, the communication interface 1200, and a power supply (not shown) by executing programs stored in the memory 1400. The processor 1300 may be configured as one or more processors. The one or more processors included in the processor 1300 may be circuitry such as a system on chip (SoC) or an integrated circuit (IC). The one or a plurality of processors included in the processor 1300 may be a general-purpose processor, such as a CPU, an AP, or a digital signal processor (DSP), a graphics dedicated processor, such as a GPU or a vision processing unit (VPU), or an artificial intelligence dedicated processor such as an NPU. For example, when the one or more of processors are artificial intelligence-dedicated processors, the artificial intelligence-dedicated processor may be designed in a hardware structure specialized for processing a specific artificial intelligence model. In an embodiment of the present disclosure, the artificial intelligence-dedicated processor may be implemented as a chip separate from the processor 1300. In an embodiment of the present disclosure, the artificial intelligence-dedicated processor may be a general-purpose chip. The processor 1300 may write data to the memory 1400 or read data stored in the memory 1400, and in particular, may process data according to a predefined operation rule or an artificial intelligence model by executing a program or at least one instruction stored in the memory 1400. The processor 1300 may perform operations described in the above embodiments, and operations described as being performed by the electronic device 1000 in the above embodiments may be understood as being performed by the processor 1300 unless otherwise specified.

In an embodiment of the present disclosure, the processor 1300 may execute one or more instructions stored in the memory 1400 to control the LiDAR sensor 1100 to obtain the LiDAR scan data. The processor 1300 may generate the map data based on the LiDAR scan data. In an embodiment of the present disclosure, the processor 1300 may generate the map data by using a simultaneous localization and mapping (SLAM) algorithm.

The processor 1300 may receive a control signal from the server device 2000 through the communication interface 1200. The processor 1300 may receive a map data request signal. For example, the processor 1400b may transmit the map data to the server device 2000 through the communication interface 1200 in response to the map data request signal.

The memory 1400 may store a program for processing by the processor 1300 and may store input/output data. In an embodiment of the present disclosure, the memory 1400 may include at least one type of storage medium from among a flash memory type, a hard disk type, a multimedia card micro type, card type memory (e.g., secure digital (SD) or extreme digital (XD) memory), random access memory (RAM), static random access memory (SRAM), read-only memory (ROM), electrically erasable programmable read-only memory (EEPROM), programmable read-only memory (PROM), magnetic memory, a magnetic disk, and an optical disk. The programs stored in the memory 1400 may be classified into a plurality of modules according to functions thereof. The memory 1400 may provide the stored data to the processor 1300 according to a request of the processor 1300.

FIG. 17B is a block diagram for describing an embodiment in which an electronic device is implemented as a robot vacuum cleaner, according to an embodiment of the present disclosure. Details overlapping those described with reference to FIGS. 1 to 17A will be omitted.

Referring to FIGS. 1 and 17A together with FIG. 17B, the electronic device 1000 may be a robot vacuum cleaner 1000a. The robot vacuum cleaner 1000a may include the LiDAR sensor 1100, the communication interface 1200, the processor 1300, the memory 1400, the input/output interface 1500, the camera 1600, and the driver 1700. The functions, operations, and configurations of the LiDAR sensor 1100, the communication interface 1200, the processor 1300, and the memory 1400 may correspond to those of the LiDAR sensor 1100, the communication interface 1200, the processor 1300, and the memory 1400 of FIG. 17A.

The input/output interface 1500 may include an input interface (e.g., a touch screen, a hard button, or a microphone) for receiving a control command or information from a user, and an output interface (e.g., a display panel or a speaker) for displaying a result of executing an operation under control by the user or a state of the robot vacuum cleaner 1000a.

The camera 1600 may generate an image by capturing a surrounding space. The robot vacuum cleaner 1000a may include the camera 1600 to recognize an object (e.g., an obstacle) in front thereof. According to an embodiment of the present disclosure, the robot vacuum cleaner 1000a may generate map data based on the image obtained by capturing the surrounding space through the camera 1600. For example, the robot vacuum cleaner 1000a may generate the map data by using the image obtained from the camera 1600 and LiDAR scan data obtained from the LiDAR sensor 1100. According to an embodiment of the present disclosure, the accuracy of mapping may be increased by generating the map data by using not only the LiDAR scan data but also the image.

The driver 1700 is a component for providing power necessary for the robot vacuum cleaner 1000a to perform a cleaning operation. The robot vacuum cleaner 1000a may move in a space according to driving force provided by the driver 1700 and perform the cleaning operation (e.g., suction). In an embodiment of the present disclosure, the driver 1700 may include a motor and a power supply unit (e.g., a battery).

FIG. 18 is a block diagram for describing components of a server device according to an embodiment of the present disclosure. Details overlapping those described with reference to FIGS. 1 to 17B will be omitted.

Referring to FIGS. 1 and 2A together with FIG. 18, the server device 2000 may include a communication interface 2100, the processor 2200, and memory 2300. However, not all illustrated components are essential components. The server device 2000 may be implemented by more components than the illustrated components, or the server device 2000 may be implemented by fewer components than the illustrated components.

The communication interface 2100 may include one or more components for performing communication between the server device 2000 and the electronic device 1000, between the server device 2000 and the user device 3000, and between the server device 2000 and the external server 4000.

In an embodiment of the present disclosure, the server device 2000 may receive the map data, the trajectory information, or current state information from the electronic device 1000 through the communication interface 2100. The server device 2000 may receive a user input (e.g., address information of a place corresponding to an indoor space), the current state information, or a control request signal for another user device from the user device 3000 through the communication interface 2100. The server device 2000 may receive a floor plan image corresponding to the indoor space from the external server 4000 through the communication interface 2100.

The server device 2000 may transmit a control signal to the electronic device 1000 and/or the user device 3000 through the communication interface 2100. For example, the server device 2000 may receive a control request signal (e.g., a drive request signal) for the electronic device 1000 of the user device 3000. The server device 2000 may control (e.g., drive control) the electronic device 1000 in response to the control request signal.

The processor 2200 may control overall operations of the server device 2000 by using program or information stored in the memory 2300. The processor 2200 may be implemented through a combination of software and a general-purpose processor such as an AP, a CPU, or a GPU. In the case of a dedicated processor, memory for implementing an embodiment of the present disclosure may be included, or a memory processor for using external memory may be included. The processor 2200 may be configured as a plurality of processors. One or more processors included in the processor 2200 may be circuitry such as an SoC or an IC. The processor 2200 may be implemented as a combination of dedicated processors, or may be implemented through a combination of software and a plurality of general-purpose processors such as an AP, a CPU, or a GPU.

In an embodiment of the present disclosure, the processor 2200 may include an artificial intelligence (AI)-dedicated processor. The AI-dedicated processor may be manufactured in the form of an AI-dedicated hardware chip or may be manufactured as a part of an existing general-purpose processor (e.g., a CPU or an AP) or a graphics-dedicated processor (e.g., a GPU) and mounted on the server device 2000. The AI-dedicated processor may perform operations related to the artificial intelligence models 2315 and 2330.

The processor 2200 may write data to the memory 2300 or read data stored in the memory 2300, and in particular, may process data according to a predefined operation rule or an artificial intelligence model by executing a program or at least one instruction stored in the memory 2300.

In an embodiment of the present disclosure, the processor 2200 may align the map data with the floor plan image. The processor 2200 may store the aligned map data and floor plan image in the training dataset DB 2320 as a training data pair.

In an embodiment of the present disclosure, the processor 2200 may train the second artificial intelligence model 2330 by using the training data pair stored in the training dataset DB 2320. The processor 2200 may infer a target floor plan image based on target map data by using the trained second artificial intelligence model 2330. The processor 2200 may provide the target floor plan image to the user device 3000.

In an embodiment of the present disclosure, the processor 2200 may transform a two-dimensional target floor plan image into three-dimensions.

The memory 2300 may store a program for processing by the processor 2200 and may store input/output data. In an embodiment of the present disclosure, the memory 2300 may include at least one type of storage medium from among a flash memory type, a hard disk type, a multimedia card micro type, card type memory (e.g., SD or XD memory), RAM, SRAM, ROM, EEPROM, PROM, magnetic memory, a magnetic disk, and an optical disk. The programs stored in the memory 2300 may be classified into a plurality of modules according to functions thereof. The memory 2300 may provide the stored data to the processor 2200 according to a request of the processor 2200.

In an embodiment of the present disclosure, the processor 2200 may execute various types of modules stored in the memory 2300. The processor 2200 may execute at least one instruction configuring the various types of modules stored in the memory 2300. The processor 2200 may process data according to a predefined operation rule or an artificial intelligence model by executing the program or at least one instruction stored in the memory 2300.

In an embodiment of the present disclosure, the processor 2200 may execute at least one of an alignment module 2310, the training dataset DB 2320, or the second artificial intelligence model 2330, stored in the memory 2300.

In an embodiment of the present disclosure, the processor 2200 may include a plurality of processors. In an embodiment of the present disclosure, at least one of the alignment module 2310, the training dataset DB 2320, or the second artificial intelligence model 2330, stored in the memory 2300, may be executed by any one of the plurality of processors.

For example, the memory 2300 may include the alignment module 2310, the training dataset DB 2320, and the second artificial intelligence model 2330. The configurations, functions, and operations of the training dataset DB 2320 and the second artificial intelligence model 2330 may correspond to the configurations, functions, and operations of the training dataset DB 2320 and the artificial intelligence model 2330 of FIG. 2A.

The alignment module 2310 may correspond to a program and/or code for aligning one image with another image. For example, the processor 2200 may load the alignment module 2310 to align the image corresponding to the map data with the floor plan image. The alignment module 2310 may include the first artificial intelligence model 2315. The configuration, function, and operation of the first artificial intelligence model 2315 may correspond to the configuration, function, and operation of the first artificial intelligence model 2315 of FIG. 4. The first artificial intelligence model 2315 may segment areas of the indoor space corresponding to the floor plan image according to predefined categories.

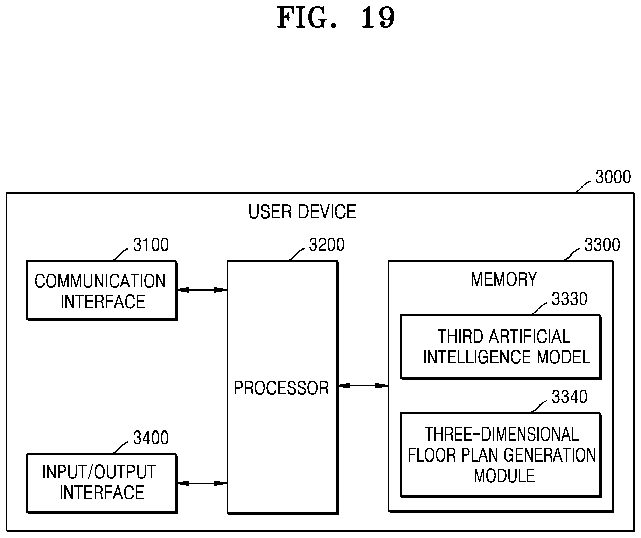

FIG. 19 is a block diagram for describing components of a user device according to an embodiment of the present disclosure. Details overlapping those described with reference to FIGS. 1 to 18 will be omitted.

Referring to FIG. 1 together with FIG. 19, the user device 3000 may include a communication interface 3100, a processor 3200, memory 3300, and an input/output interface 3400. However, not all illustrated components are essential components. The user device 3000 may be implemented by more components than the illustrated components, or the user device 3000 may be implemented by fewer components than the illustrated components.

The communication interface 3100 may include one or more components for performing communication between the user device 3000 and the server device 2000, between the user device 3000 and the electronic device 1000, and between the user device 3000 and another user device.

In an embodiment of the present disclosure, the user device 3000 may receive the floor plan image from the server device 2000 through the communication interface 3100. The user device 3000 may receive current state information of the other user device from the server device 2000 through the communication interface 3100. The user device 3000 may receive the target map data from the electronic device 1000 through the communication interface 3100. The user device 3000 may transmit information corresponding to a user input to the server device 2000 through the communication interface 3100. The user device 3000 may transmit the current state information of the user device 3000 to the server device 2000 through the communication interface 3100.

The processor 3200 may control overall operations of the user device 3000 by using the program or information stored in the memory 3300. The processor 3200 may be implemented through a combination of software and a general-purpose processor such as an AP, a CPU, or a GPU. In the case of a dedicated processor, memory for implementing an embodiment of the present disclosure may be included, or a memory processor for using external memory may be included. The processor 3200 may be configured as a plurality of processors. One or more processors included in the processor 3200 may be circuitry such as an SoC or an IC. The processor 3200 may be implemented as a combination of dedicated processors, or may be implemented through a combination of software and a plurality of general-purpose processors such as an AP, a CPU, or a GPU.

In an embodiment of the present disclosure, the processor 3200 may include an AI-dedicated processor. The AI-dedicated processor may be manufactured in the form of an AI-dedicated hardware chip or may be manufactured as a part of an existing general-purpose processor (e.g., a CPU or an AP) or a graphics-dedicated processor (e.g., a GPU) and mounted on the user device 3000. The AI-dedicated processor may perform operations related to a third artificial intelligence model 3330.

The processor 3200 may write data to the memory 3300 or read data stored in the memory 3300, and in particular, may process data according to a predefined operation rule or an artificial intelligence model by executing a program or at least one instruction stored in the memory 3300.

In an embodiment of the present disclosure, the processor 3200 may obtain the floor plan image from the server device 2000. The processor 3200 may display the floor plan image on a display. The processor 3200 may add an image obtained by visualizing the other user device to the floor plan image and display the same on the display. The processor 3200 may display the current state information of the other user device (e.g., a home appliance) on the display together with the floor plan image.

In an embodiment of the present disclosure, the processor 3200 may receive the target map data from the server device 2000 or the electronic device 1000. The processor 3200 may infer the target floor plan image by using the third artificial intelligence model 3330 that uses the target map data as an input. The processor 3200 may display the target floor plan image on the display. The processor 3200 may add the image obtained by visualizing the other user device to the target floor plan image and display the image on the display. The processor 3200 may display, on the display, the current state information of the other user device (e.g., a home appliance) together with the target floor plan image.

In an embodiment of the present disclosure, the processor 3200 may transform a two-dimensional floor plan image into three-dimensions. The processor 3200 may display the three-dimensional floor plan image on the display. The processor 3200 may add the image obtained by three-dimensionally visualizing the other user device to the three-dimensional floor plan image and display the same on the display.

The memory 3300 may store a program for processing by the processor 3200 and may store input/output data. In an embodiment of the present disclosure, the memory 3300 may include at least one type of storage medium from among a flash memory type, a hard disk type, a multimedia card micro type, card type memory (e.g., SD or XD memory), RAM, SRAM, ROM, EEPROM, PROM, magnetic memory, a magnetic disk, and an optical disk. The programs stored in the memory 3300 may be classified into a plurality of modules according to functions thereof. The memory 3300 may provide the stored data to the processor 3200 according to a request of the processor 3200.

In an embodiment of the present disclosure, the processor 3200 may execute various types of modules stored in the memory 3300. The processor 3200 may execute at least one instruction configuring the various types of modules stored in the memory 3300. The processor 3200 may process data according to a predefined operation rule or an artificial intelligence model by executing the program or at least one instruction stored in the memory 3300.

In an embodiment of the present disclosure, the processor 3200 may execute at least one of the third artificial intelligence model 3330 or a three-dimensional floor plan generation module 3340 stored in the memory 3300.

In an embodiment of the present disclosure, the processor 3200 may include a plurality of processors. In an embodiment of the present disclosure, at least one of the third artificial intelligence model 3330 or the three-dimensional floor plan generation module 3340 in the memory 3300 may be executed by any one of the plurality of processors.

In an embodiment of the present disclosure, the memory 3300 may include the third artificial intelligence model 3330 and the three-dimensional floor plan generation module 3340. The third artificial intelligence model 3330 may be the same model as the second artificial intelligence model 2330 of FIG. 18. In an embodiment of the present disclosure, in order to efficiently perform an operation on the third artificial intelligence model 3330 with hardware performance of the user device 3000, the third artificial intelligence model 3330 may be a model obtained by lightening a pre-trained artificial intelligence model (e.g., the second artificial intelligence model 2330 of FIG. 18).

The three-dimensional floor plan generation module 3340 may correspond to a program and/or code for transforming a two-dimensional floor plan image into a three-dimensional floor plan image. For example, the processor 3200 may load the alignment module 2310 to transform the two-dimensional floor plan image into the three-dimensional floor plan image. The three-dimensional floor plan generation module 3340 may include a fourth artificial intelligence model (not shown). The fourth artificial intelligence model (not shown) may be pre-trained to infer a three-dimensional floor plan image from a two-dimensional floor plan image.

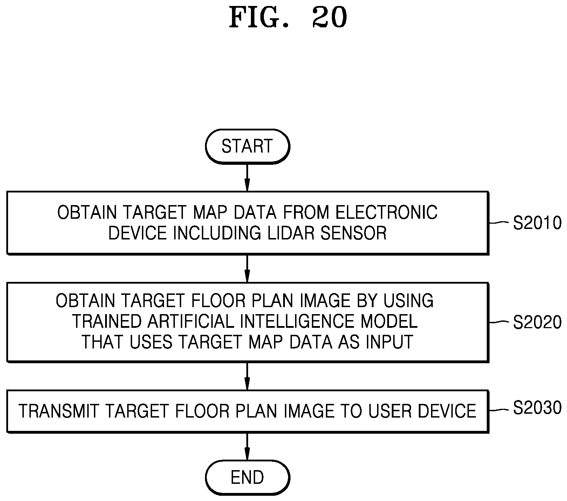

FIG. 20 is a flowchart for describing a method of generating a floor plan image from map data, according to an embodiment of the present disclosure. Details overlapping those described with reference to FIGS. 1 to 19 will be omitted. For convenience of description, FIG. 20 will be described with reference to FIG. 1.

Referring to FIG. 20, the method of generating a floor plan image from map data may include operations S2010 to S2030. In an embodiment of the present disclosure, operations S2010 to S2030 may be performed by the server device 2000 or the processor 2200 of the server device 2000. However, the present disclosure is not limited thereto, and operations S2010 to S2030 may be performed by any electronic device (e.g., the electronic device 1000 or the user device 3000). The method of generating a floor plan image from map data, according to an embodiment of the present disclosure, is not limited to that illustrated in FIG. 20, and any one of the operations illustrated in FIG. 20 may be omitted, or an operation not illustrated in FIG. 20 may be further included.

In operation S2010, the server device 2000 may obtain the target map data from the electronic device 1000 including the LiDAR sensor 1100. For example, the electronic device 1000 may include a robot vacuum cleaner.

In operation S2020, the server device 2000 may obtain the target floor plan image by using a trained artificial intelligence model that uses the target map data as an input. For example, the configuration, function, and operation of the trained artificial intelligence model may correspond to the configuration, function, and operation of the second artificial intelligence model 2330 of FIG. 18.

In operation S2030, the server device 2000 may transmit the target floor plan image to the user device 3000. The user device 3000 may display the target floor plan image on the display.

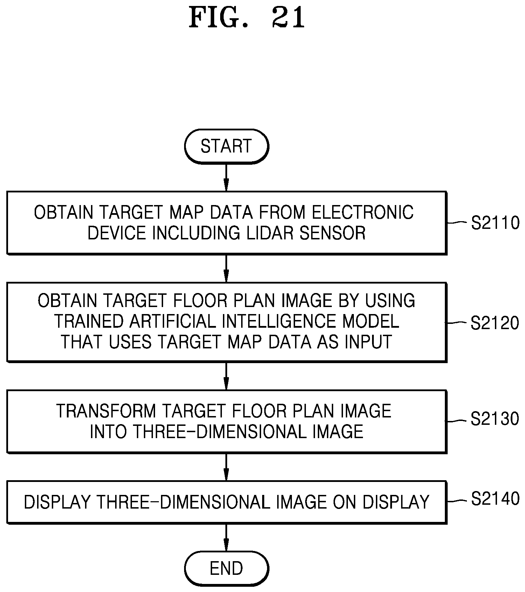

FIG. 21 is a flowchart for describing a method of generating a floor plan image from map data, according to an embodiment of the present disclosure. Details overlapping those described with reference to FIGS. 1 to 20 will be omitted. For convenience of description, FIG. 21 will be described with reference to FIG. 1.

Referring to FIG. 21, the method of generating a floor plan image from map data may include operations S2110 to S2140. In an embodiment of the present disclosure, operations S2110 to S2140 may be performed by the user device 3000 or the processor 3200 of the user device 3000. However, the present disclosure is not limited thereto, and operations S2110 to S2140 may be performed by any electronic device (e.g., the server device 2000, the electronic device 1000, or another user device). The method of generating a floor plan image from map data, according to an embodiment of the present disclosure, is not limited to that illustrated in FIG. 21, and any one of the operations illustrated in FIG. 21 may be omitted, or an operation not illustrated in FIG. 21 may be further included.

In operation S2110, the user device 3000 may obtain the target map data from the electronic device 1000 including the LiDAR sensor 1100. However, the present disclosure is not limited thereto, and the user device 3000 may obtain the target map data from the server device 2000.

In operation S2120, the user device 3000 may obtain the target floor plan image by using the trained artificial intelligence model that uses the target map data as an input. For example, the configuration, function, and operation of the trained artificial intelligence model may correspond to the configuration, function, and operation of the third artificial intelligence model 3330 of FIG. 19.

In operation S2130, the user device 3000 may transform the target floor plan image into a three-dimensional image. In an embodiment of the present disclosure, the user device may infer the three-dimensional image by using the trained artificial intelligence model that uses the target floor plan image as an input.

In operation S2140, the user device 3000 may display the three-dimensional image on the display.

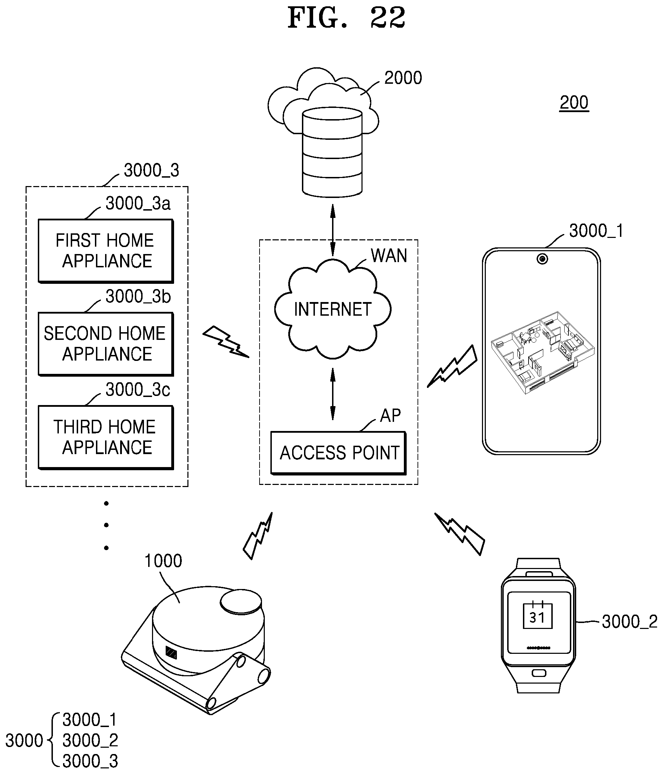

FIG. 22 is a conceptual diagram for describing a device control system according to an embodiment of the present disclosure. Details overlapping those described with reference to FIGS. 1 to 21 will be omitted. The operations, functions, and configurations of the electronic device 1000, the server device 2000, and the user device 3000 of FIG. 1 may correspond to the operations, functions, and configurations of the electronic device 1000, the server device 2000, and the user device 3000 of FIG. 22. For convenience of description, FIG. 22 will be described with reference to FIG. 1.

Referring to FIG. 22, a device control system 200 may include the electronic device 1000, the server device 2000, and at least one user device (e.g., a smartphone 3000_1, a wearable device 3000_2, and a home appliance 3000_3).

Hereinafter, for convenience of description, the present disclosure will be described based on a situation in which the home appliance 3000_3 and/or the electronic device 1000 are controlled using the smartphone 3000_1, but the present disclosure is not limited thereto. In an embodiment of the present disclosure, the home appliance 3000_3 and/or the electronic device 1000 may be controlled by using the wearable device 3000_2.

In an embodiment of the present disclosure, a program (e.g., an application) for controlling the home appliance 3000_3 and/or the electronic device 1000 may be stored in memory (not shown) of the smartphone 3000_1. The smartphone 3000_1 may be sold in a state in which an application for controlling the home appliance 3000_3 and/or the electronic device 1000 is installed, or may be sold in a state in which the application is not installed. When the smartphone 3000_1 is sold in the state in which the application for controlling the home appliance 3000_3 and/or the electronic device 1000 is not installed, a user may download the application from an external server that provides the application and install the downloaded application in the smartphone 3000_1.

The user may control the home appliance 3000_3 and/or the electronic device 1000 by using the application installed in the smartphone 3000_1. For example, when the user executes the application installed in the smartphone 3000_1, identification information of the home appliance 3000_3 and/or the electronic device 1000 connected to the smartphone 3000_1 with a same user account as the smartphone 3000_1 may be displayed on an application execution window. The user may perform desired control on the home appliance 3000_3 and/or the electronic device 1000 through the application execution window. When the user inputs a control command for the home appliance 3000_3 and/or the electronic device 1000 through the application execution window, the smartphone 3000_1 may directly transmit the control command (or a control signal corresponding to the control command) to the home appliance 3000_3 and/or the electronic device 1000 through a network, or may transmit the control command to the home appliance 3000_3 and/or the electronic device 1000 via the server device 2000.

The application of the smartphone 3000_1 may receive various user inputs for controlling the home appliance 3000_3 and/or the electronic device 1000. The application provides a graphical user interface (GUI) for receiving various user inputs, and receives a user input through the GUI. In an embodiment of the present disclosure, the smartphone 3000_1 may provide a floor plan image of an indoor space through the GUI. The smartphone 3000_1 may provide an object image corresponding to the home appliance 3000_3 and/or the electronic device 1000 to a location of the home appliance 3000_3 and/or the electronic device 1000 on the floor plan image.

According to an embodiment of the present disclosure, an efficient and intuitive user interface for controlling the home appliance 3000_3 and/or the electronic device 1000 may be provided to the user.

While communicating with the server device 2000, the smartphone 3000_1 updates state information of the home appliance 3000_3 and/or the electronic device 1000 and provides the updated state information through the application. Also, the smartphone 3000_1 may communicate with the server device 2000 and transmit the user input received through the application to the home appliance 3000_3 and/or the electronic device 1000.

A network (NET) may include both a wired network and a wireless network. The wired network may include a cable network or a telephone network, and the wireless network may include any network for transmitting or receiving a signal through radio waves. The wired network and the wireless network may be connected to each other.

The network (NET) may include a wide area network (WAN) such as the Internet, a local area network (LAN) formed around an access point AP, and a wireless personal area network (WPAN) that does not pass through a access point. The WPAN may include Bluetooth^{™} (IEEE 802.15.1), ZigBee (IEEE 802.15.4), Wi-Fi direct, NFC, Z-wave, or the like, but is not limited thereto.

The access point AP may connect an LAN to which the home appliance 3000_3, the electronic device 1000, and the smartphone 3000_1 are connected to a WAN to which the server device 2000 is connected. The home appliance 3000_3, the electronic device 1000, and/or the smartphone 3000_1 may be connected to the server device 2000 through the WAN.

The access point AP may communicate with the home appliance 3000_3, the electronic device 1000, and the smartphone 3000_1 by using wireless communication such as Wi-Fi^{™} (IEEE 802.11), and may access the WAN by using wired communication.

The home appliance 3000_3 and/or the electronic device 1000 may transmit information about an operation or state to the server device 2000 through the network NET. For example, the home appliance 3000_3 and/or the electronic device 1000 may transmit the information about the operation or state to the server device 2000 through Wi-Fi^{™} (IEEE 802.11) communication.

When a Wi-Fi communication module is not provided in the home appliance 3000_3 and/or the electronic device 1000, the home appliance 3000_3 and/or the electronic device 1000 may transmit the information about the operation or state to the server device 2000 through another home appliance including a Wi-Fi communication module. For example, when the home appliance 3000_3 and/or the electronic device 1000 transmits the information about the operation or state to another home appliance through a WPAN (e.g., BLE communication), the other home appliance may transmit the information about the operation or state of the home appliance 3000_3 and/or the electronic device 1000 to the server device 2000. Also, for example, when a Wi-Fi communication module is not provided in the home appliance 3000_3 and/or the electronic device 1000, the home appliance 3000_3 and/or the electronic device 1000 may be connected to a communication relay device by wires, and may perform Wi-Fi communication and 485 communication by using the communication relay device.

The home appliance 3000_3 and/or the electronic device 1000 may provide the information about the operation or state of the home appliance 3000_3 and/or the electronic device 1000 to the server device 2000 according to prior approval of the user. Transmission of information to the server device 2000 may be performed when a request is received from the server device 2000, may be performed when a specific event occurs in the home appliance 3000_3 and/or the electronic device 1000, or may be performed periodically or in real time. In an embodiment of the present disclosure, the electronic device 1000 may determine whether a change exceeding a predefined threshold value has occurred in the map data written in real time. The electronic device 1000 may transmit the map data to the server device 2000 based on a result of the determination. The server device 2000 may infer a new floor plan image based on new map data.

When the information about the operation or state is received from the home appliance 3000_3 and/or the electronic device 1000, the server device 2000 may update information pre-stored in relation to the home appliance 3000_3 and/or the electronic device 1000. The server device 2000 may transmit the information about the operation or state of the home appliance 3000_3 and/or the electronic device 1000 to the smartphone 3000_1 through the network NET.

When a request is received from the smartphone 3000_1, the server device 2000 may transmit, to the smartphone 3000_1, the information about the operation or state of the home appliance 3000_3 and/or the electronic device 1000. For example, when the user executes an application connected to the server device 2000 in the smartphone 3000_1, the smartphone 3000_1 may request the server device 2000 for the information about the operation or state of the home appliance 3000_3 and/or the electronic device 1000 through the application and receive the same. When the information about the operation or state is received from the home appliance 3000_3 and/or the electronic device 1000, the server device 2000 may transmit, in real time, the information about the operation or state of the home appliance 3000_3 and/or the electronic device 1000 to the smartphone 3000_1. The server device 2000 may periodically transmit the information about the operation or state of the home appliance 3000_3 and/or the electronic device 1000 to the smartphone 3000_1. The smartphone 3000_1 may transmit the information about the operation or state of the home appliance 3000_3 and/or the electronic device 1000 to the user by displaying the information about the operation or state of the home appliance 3000_3 and/or the electronic device 1000 on the application execution window.

The home appliance 3000_3 and/or the electronic device 1000 may obtain various pieces of information from the server device 2000 and provide the obtained information to the user. Also, the home appliance 3000_3 and/or the electronic device 1000 may receive a file for updating pre-installed software or data related to the pre-installed software from the server device 2000, and update the pre-installed software or the data related to the pre-installed software based on the received file.

The home appliance 3000_3 and/or the electronic device 1000 may operate according to a control command received from the server device 2000. For example, the home appliance 3000_3 and/or the electronic device 1000 may operate according to the control command received from the server device 2000 when the home appliance 3000_3 and/or the electronic device 1000 has obtained the prior approval of the user to operate according to the control command of the server device 2000 even when there is no user input. The control command received from the server device 2000 may include, but is not limited to, a control command input by the user through the smartphone 3000_1 or a control command generated by the server device 2000 based on a preset condition.

An embodiment of the present disclosure may provide a method of aligning map data with a floor plan image. The method may include obtaining a first floor plan image corresponding to an indoor space. The method may include segmenting the indoor space into a plurality of areas by using a first artificial intelligence model that uses the first floor plan image as an input. The method may include obtaining a second floor plan image in which a predefined area from among the plurality of areas of the first floor plan image has been removed. The method may include obtaining first map data and trajectory information from an electronic device including a LiDAR sensor for scanning the indoor space. The method may include obtaining second map data corresponding to an area in which the LiDAR sensor has traveled from among the first map data, based on the trajectory information. The method may include aligning the first map data with the first floor plan image based on the second floor plan image and the second map data. According to an embodiment of the present disclosure, an image appropriately aligned with an image of a ground truth value may be generated for the accuracy of inference of an artificial intelligence model. According to an embodiment of the present disclosure, it is possible to efficiently generate a high-quality training data pair.

In an embodiment of the present disclosure, the method may further include training, by using training data including the aligned second map data and first floor plan image, a second artificial intelligence model configured to output a target floor plan image by using target map data as an input. According to an embodiment of the present disclosure, the performance of the artificial intelligence model may be improved by training the artificial intelligence model with high-quality data.

In an embodiment of the present disclosure, the aligning of the second map data with the second floor plan image may include obtaining a first image by performing at least one of flipping or rotation on an image corresponding to the second map data. The aligning of the second map data with the second floor plan image may include obtaining a second image by performing rotation on the first image. The aligning of the second map data with the second floor plan image may include obtaining a third image by performing at least one of scaling or translating on the second image. According to an embodiment of the present disclosure, image alignment performance may be greatly improved by using a plurality of techniques.

In an embodiment of the present disclosure, the obtaining of the first image by performing at least one of the flipping or the rotation on the image corresponding to the second map data may include obtaining a plurality of first candidate images by performing at least one of flipping or rotation on the image corresponding to the second map data. The obtaining of the first image by performing at least one of the flipping or the rotation on the image corresponding to the second map data may include determining a first degree of matching between each of the plurality of first candidate images and the second floor plan image. The obtaining of the first image by performing at least one of the flipping or the rotation on the image corresponding to the second map data may include determining, based on the first degree of matching, the first image from among the plurality of first candidate images. According to an embodiment of the present disclosure, by performing coarse alignment before fine alignment, it is possible to dramatically reduce operation costs.

In an embodiment of the present disclosure, the flipping may include at least one of upside-down flipping and left-right flipping.

In an embodiment of the present disclosure, the rotation may include at least one of 90° rotation, 180° rotation, or 270° rotation.

In an embodiment of the present disclosure, the first degree of matching may include an intersection over union (IoU) value between each of the plurality of first candidate images and the second floor plan image.

In an embodiment of the present disclosure, the obtaining of the second image by performing the rotation on the first image may include obtaining a plurality of second candidate images by performing rotation on the first image. The obtaining of the second image by performing the rotation on the first image may include determining a second degree of matching between each of the plurality of second candidate images and the second floor plan image. The obtaining of the second image by performing the rotation on the first image may include determining, based on the second degree of matching, the second image from among the plurality of second candidate images. According to an embodiment of the present disclosure, alignment accuracy may be increased by performing fine rotation.

In an embodiment of the present disclosure, the obtaining of the third image by performing at least one of the scaling or the translating on the second image may include obtaining a plurality of third candidate images by performing at least one of scaling or translating on the second image. The obtaining of the third image by performing at least one of the scaling or the translating on the second image may include determining a third degree of matching between each of the plurality of third candidate images and the second floor plan image. The obtaining of the third image by performing at least one of the scaling or the translating on the second image may include determining, based on the third degree of matching, the third image from among the plurality of third candidate images. According to an embodiment of the present disclosure, alignment accuracy may be increased by performing the scaling and the translating.

In an embodiment of the present disclosure, the obtaining of the third image by performing at least one of the scaling or the translating on the second image may include obtaining the plurality of third candidate images by performing at least one of the scaling or the translating on the second image. The obtaining of the third image by performing at least one of the scaling or the translating on the second image may include obtaining an inverse image corresponding to the second floor plan image. The obtaining of the third image by performing at least one of the scaling or the translating on the second image may include determining the third degree of matching between each of the plurality of third candidate images and the second floor plan image. The obtaining of the third image by performing at least one of the scaling or the translating on the second image may include determining a fourth degree of matching between each of the plurality of third candidate images and the inverse image. The obtaining of the third image by performing at least one of the scaling or the translating on the second image may include determining the third image from among the plurality of third candidate images, based on the third degree of matching and the fourth degree of matching. According to an embodiment of the present disclosure, it is possible to increase the alignment accuracy by using the inverse image of the floor plan image together.

In an embodiment of the present disclosure, the aligning of the first map data with the first floor plan image, based on the second floor plan image and the second map data, may include obtaining a transformation matrix for transforming the second map data to the third image. The aligning of the first map data with the first floor plan image, based on the second floor plan image and the second map data, may include aligning the first map data with the first floor plan image by using the transformation matrix.

An embodiment of the present disclosure may provide the server device 2000 for performing a method of aligning map data with a floor plan image. The server device 2000 may include the memory 2300 storing at least one instruction. The server device may include at least one processor 2200 configured to execute the at least one instruction. The at least one processor 2200 may execute the at least one instruction to cause the server device 2000 to obtain a first floor plan image corresponding to an indoor space. The at least one processor 2200 may execute the at least one instruction to cause the server device 2000 to segment the indoor space into a plurality of areas by using a first artificial intelligence model that uses the first floor plan image as an input. The at least one processor 2200 may execute the at least one instruction to cause the server device 2000 to obtain a second floor plan image in which a predefined area from among the plurality of areas of the first floor plan image has been removed. The at least one processor 2200 may execute the at least one instruction to cause the server device 2000 to obtain first map data and trajectory information from an electronic device including a LiDAR sensor for scanning the indoor space. The at least one processor 2200 may execute the at least one instruction to cause the server device 2000 to obtain second map data corresponding to an area in which the LiDAR sensor has traveled from among the first map data, based on the trajectory information. The at least one processor 2200 may execute the at least one instruction to cause the server device 2000 to align the first map data with the first floor plan image based on the second floor plan image and the second map data.

The at least one processor 2200 may execute the at least one instruction to cause server device 2000 to train, by using training data including the aligned second map data and first floor plan image, a second artificial intelligence model configured to output a target floor plan image by using target map data as an input.

The at least one processor 2200 may execute the at least one instruction to cause server device 2000 to obtain a first image by performing at least one of flipping or rotation on an image corresponding to the second map data. The at least one processor 2200 may execute the at least one instruction to cause server device 2000 to obtain a second image by performing rotation on the first image. The at least one processor 2200 may execute the at least one instruction to cause server device 2000 to obtain a third image by performing at least one of scaling or translating on the second image.

The at least one processor 2200 may execute the at least one instruction to cause server device 2000 to obtain a plurality of first candidate images by performing at least one of flipping or rotation on the image corresponding to the second map data. The at least one processor 2200 may execute the at least one instruction to cause server device 2000 to determine a first degree of matching between each of the plurality of first candidate images and the second floor plan image. The at least one processor 2200 may execute the at least one instruction to cause server device 2000 to determine, based on the first degree of matching, the first image from among the plurality of first candidate images.

The first degree of matching may include an intersection over union (IoU) value between each of the plurality of first candidate images and the second floor plan image.

The at least one processor 2200 may execute the at least one instruction to cause server device 2000 to obtain a plurality of second candidate images by performing rotation on the first image. The at least one processor 2200 may execute the at least one instruction to cause server device 2000 to determine a second degree of matching between each of the plurality of second candidate images and the second floor plan image. The at least one processor 2200 may execute the at least one instruction to cause server device 2000 to determine, based on the second degree of matching, the second image from among the plurality of second candidate images.

The at least one processor 2200 may execute the at least one instruction to cause server device 2000 to obtain a plurality of third candidate images by performing at least one of scaling or translating on the second image. The at least one processor 2200 may execute the at least one instruction to cause server device 2000 to determine a third degree of matching between each of the plurality of third candidate images and the second floor plan image. The at least one processor 2200 may execute the at least one instruction to cause server device 2000 to determine, based on the third degree of matching, the third image from among the plurality of third candidate images. The at least one processor 2200 may execute the at least one instruction to cause server device 2000 to obtain the plurality of third candidate images by performing at least one of scaling or translating on the second image.

The at least one processor 2200 may execute the at least one instruction to cause the server device 2000 to obtain an inverse image corresponding to the second floor plan image and determine the third degree of matching between each of the plurality of third candidate images and the second floor plan image. The at least one processor 2200 may execute the at least one instruction to cause the server device 2000 to determine a fourth degree of matching between each of the plurality of third candidate images and the inverse image. The at least one processor 2200 may execute the at least one instruction to cause the server device 2000 to determine the third image from among the plurality of third candidate images, based on the third degree of matching and the fourth degree of matching.

The at least one processor 2200 may execute the at least one instruction to cause the server device 2000 to obtain a transformation matrix for transforming the second map data into the third image. The at least one processor 2200 may execute the at least one instruction to cause the server device 2000 to align the first map data with the first floor plan image by using the transformation matrix.

A method according to an embodiment of the present disclosure may be implemented in the form of program commands that may be executed by using various computer and recorded on a computer-readable medium. The computer-readable medium may include a program command, a data file, a data structure, and the like independently or collectively. The program commands recorded on the medium may be specially designed and configured for the present disclosure or may be known and available to one of ordinary skill in the computer software field. Examples of computer-readable recording medium include magnetic media such as hard disks, floppy disks, and magnetic tapes, optical media such as CD-ROMs and DVDs, magneto-optical media such as floptical disks, and hardware devices specially configured to store and execute program commands, such as read-only memory (ROM), random-access memory (RAM), and flash memory. Examples of the program command include not only machine codes generated by a compiler, but also high-level language codes that may be executed by a computer by using an interpreter or the like.

Some embodiments of the present disclosure may also be implemented in the form of a recording medium including instructions executable by a computer, such as a program module executed by a computer. Computer-readable media may be any available media accessible by a computer and include all volatile and non-volatile media and separable and non-separable media. Also, the computer-readable media may include all computer storage media and communication media. Computer storage media include all volatile and non-volatile media and separable and non-separable media implemented in any method or technology for storage of information such as computer-readable instructions, data structures, program modules, and other data. Communication media typically include computer-readable instructions, data structures, program modules, other data of modulated data signals such as carrier waves, or other transmission mechanisms, and include any information delivery media. In addition, some embodiments of the present disclosure may be implemented as a computer program or a computer program product including computer-executable instructions, such as a computer-executable computer program.

In an embodiment of the present disclosure, a machine-readable storage medium may be provided in the form of a non-transitory storage medium. Here, the term "non-transitory storage medium" only denotes a tangible device and does not contain a signal (e.g., electromagnetic waves), and this term does not distinguish between a case where data is semi-permanently stored in the storage medium and a case where data is temporarily stored in the storage medium. For example, the "non-transitory storage medium" may include a buffer in which data is temporarily stored.

According to an embodiment of the present disclosure, a method according to various embodiments of the present document may be included and provided in a computer program product. The computer program product may be traded between a seller and a buyer as a commodity. The computer program product may be distributed in the form of a machine-readable storage medium (e.g., compact disc read only memory (CD-ROM)), or may be distributed (e.g., downloaded or uploaded) through an application store or directly or online between two user devices (e.g., smartphones). In the case of online distribution, at least a portion of a computer program product (e.g., a downloadable application) may be at least temporarily generated or temporarily stored in a machine-readable storage medium such as a server of a manufacturer, a server of an application store, or memory of a relay server.

Although the embodiments of the present disclosure have been described in detail above, the scope of the present disclosure is not limited thereto, and various modifications and improvements made by one of ordinary skill in the art by using the basic concept of the present disclosure defined in the following claims also fall within the scope of the present disclosure.

## Claims

1. A method of aligning map data with a floor plan image, the method comprising:
obtaining a first floor plan image corresponding to an indoor space;
segmenting the indoor space into a plurality of areas by using a first artificial intelligence model that uses the first floor plan image as an input;
obtaining a second floor plan image in which a predefined area from among the plurality of areas of the first floor plan image has been removed;
obtaining first map data and trajectory information from an electronic device including a LiDAR sensor for scanning the indoor space;
based on the trajectory information, obtaining second map data corresponding to an area in which the LiDAR sensor has traveled, from among the first map data; and
aligning the first map data with the first floor plan image, based on the second floor plan image and the second map data.

2. The method of claim 1, further comprising training, by using training data including the aligned second map data and first floor plan image, a second artificial intelligence model configured to output a target floor plan image by using target map data as an input.

3. The method of any one of claims 1 and 2, wherein the aligning of the second map data with the second floor plan image comprises:
obtaining a first image by performing at least one of flipping or rotation on an image corresponding to the second map data;
obtaining a second image by performing rotation on the first image; and
obtaining a third image by performing at least one of scaling or translating on the second image.

4. The method of claim 3, wherein the obtaining of the first image by performing at least one of the flipping or the rotation on the image corresponding to the second map data comprises:
obtaining a plurality of first candidate images by performing at least one of flipping or rotation on the image corresponding to the second map data;
determining a first degree of matching between each of the plurality of first candidate images and the second floor plan image; and
based on the first degree of matching, determining the first image from among the plurality of first candidate images.

5. The method of claim 4, wherein
the flipping comprises at least one of upside-down flipping or left-right flipping, and
the rotation comprises at least one of 90° rotation, 180° rotation, or 270° rotation.

6. The method of any one of claims 4 and 5, wherein
the first degree of matching comprises an intersection over union (IoU) value between each of the plurality of first candidate images and the second floor plan image.

7. The method of any one of claims 3 to 6, wherein
the obtaining of the second image by performing the rotation on the first image comprises:
obtaining a plurality of second candidate images by performing rotation on the first image;
determining a second degree of matching between each of the plurality of second candidate images and the second floor plan image; and
based on the second degree of matching, determining the second image from among the plurality of second candidate images.

8. The method of any one of claims 3 to 7, wherein
the obtaining of the third image by performing at least one of the scaling or the translating on the second image comprises:
obtaining a plurality of third candidate images by performing at least one of scaling or translating on the second image;
determining a third degree of matching between each of the plurality of third candidate images and the second floor plan image; and based on the third degree of matching, determining the third image from
among the plurality of third candidate images.

9. The method of any one of claims 3 to 8, wherein
the obtaining of the third image by performing at least one of the scaling or the translating on the second image comprises:
obtaining the plurality of third candidate images by performing at least one of the scaling or the translating on the second image;
obtaining an inverse image corresponding to the second floor plan image;
determining the third degree of matching between each of the plurality of third candidate images and the second floor plan image;
determining a fourth degree of matching between each of the plurality of third candidate images and the inverse image; and
based on the third degree of matching and the fourth degree of matching, determining the third image from among the plurality of third candidate images.

10. The method of any one of claims 3 to 9, wherein
the aligning of the first map data with the first floor plan image, based on the second floor plan image and the second map data, comprises:
obtaining a transformation matrix for transforming the second map data to the third image; and
aligning the first map data with the first floor plan image by using the transformation matrix.

11. A server device (2000) comprising:
memory (2300) storing at least one instruction; and
at least one processor (2200) configured to execute the at least one instruction, wherein the at least one processor (2200) executes the at least one instruction to cause the server device (2000) to:
obtain a first floor plan image corresponding to an indoor space;
segment the indoor space into a plurality of areas by using a first artificial intelligence model that uses the first floor plan image as an input;
obtain a second floor plan image in which a predefined area from among the plurality of areas of the first floor plan image has been removed;
obtain first map data and trajectory information from an electronic device including a LiDAR sensor for scanning the indoor space;
based on the trajectory information, obtain second map data corresponding to an area in which the LiDAR sensor has traveled, from among the first map data; and
align the first map data with the first floor plan image, based on the second floor plan image and the second map data.

12. The server device (2000) of claim 11, wherein
the at least one processor (2200) executes the at least one instruction to cause server device (2000) to
train, by using training data including the aligned second map data and first floor plan image, a second artificial intelligence model configured to output a target floor plan image by using target map data as an input.

13. The server device (2000) of any one of claims 11 and 12, wherein
the at least one processor (2200) executes the at least one instruction to cause server device (2000) to:
obtain a first image by performing at least one of flipping or rotation on an image corresponding to the second map data;
obtain a second image by performing rotation on the first image; and
obtain a third image by performing at least one of scaling or translating on the second image.

14. The server device (2000) of claim 13, wherein
the at least one processor (2200) executes the at least one instruction to cause server device (2000) to:
obtain a plurality of first candidate images by performing at least one of flipping or rotation on the image corresponding to the second map data;
determine a first degree of matching between each of the plurality of first candidate images and the second floor plan image; and
based on the first degree of matching, determine the first image from
among the plurality of first candidate images.

15. A computer-readable recording medium having recorded thereon a program for executing, on a computer, the method of any one of claims 1 to 10.
